# EUROPÄISCHE PATENTSCHRIFT

(11) **EP 2 614 949 B1**
(45) Veröffentlichungstag und Bekanntmachung des Hinweises auf die Patenterteilung: **28.05.2014**
(21) Anmeldenummer: 13150670.1
(22) Anmeldetag: 09.01.2013
(51) Int. Cl.: B29C 49/32, B29C 49/56, B29C 49/04

(54) **Blasformsystem sowie Verfahren zur Blasformung von Hohlkörpern**
Blow-moulding system and method for the blow-moulding of hollow bodies
Système de formage par soufflage ainsi que procédé de formage par soufflage de corps creux

(30) Priorität: 10.01.2012 DE 102012100161
(43) Veröffentlichungstag der Anmeldung: 17.07.2013
(73) Patentinhaber: EXTRAPLAST Maschinen GmbH, 53842 Troisdorf (DE)
(72) Erfinder: Forsbach, Heinz-Peter, 53797 Lohmar (DE)
(74) Vertreter: Fritz, Edmund Lothar

(56) Entgegenhaltungen:
- DE-C2- 19 747 698
- DE-C2- 19 927 138
- US-A1- 2003 091 683
- US-A1- 2007 176 330

## Beschreibung

Die vorliegende Erfindung betrifft ein Blasformsystem zur Herstellung von Hohlkörpern umfassend wenigstens eine Extrudereinrichtung sowie wenigstens eine erste Blasformeinrichtung, die mittels eines Antriebs entlang einer Führung gegenüber der Extrudereinrichtung linear verfahrbar ist, wobei weiterhin eine Antriebseinrichtung vorgesehen ist, mittels derer die beiden die Formhälften der Blasformeinrichtung tragenden Schließenhälften der Blasformeinrichtung zwecks Öffnen bzw. Schließen der Blasform gegeneinander verfahrbar sind, sowie umfassend wenigstens eine zweite Blasformeinrichtung, die ebenfalls gegenüber der Extrudereinrichtung linear verfahrbar ist und deren die Formhälften dieser zweiten Blasformeinrichtung tragenden Schließenhälften zwecks Öffnen bzw. Schließen der zweiten Blasform gegeneinander verfahrbar sind, wobei beide Blasformeinrichtungen in Verfahrrichtung gegenüber der Extrudereinrichtung im wesentlichen in einer Flucht hintereinander angeordnet sind und wobei die erste und die zweite Blasformeinrichtung jeweils in Bezug auf die gesamte Anordnung eine äußere Schließenhälfte und jeweils eine innere Schließenhälfte aufweisen, wobei sowohl die innere Schließenhälfte der ersten Blasformeinrichtung mit der an dieser angebrachten Blasformhälfte als auch die innere Schließenhälfte der zweiten Blasformeinrichtung mit der an dieser angebrachten Blasformhälfte jeweils unabhängig von den jeweiligen äußeren Schließenhälften der Blasformeinrichtungen gegenüber letzteren linear in Richtung der Flucht der Anordnung beider Blasformeinrichtungen verfahrbar sind, ohne den Maschinenrahmen des Blasformsystems zu verfahren, wobei das Blasformsystem eine mittlere Schließeinheit aufweist, die die Funktion der inneren Schließenhälfte beider Blasformeinrichtungen übernimmt und an dieser an einer Seite die Formaufspannplatte mit dem Formwerkzeug der inneren Blasformhälfte der ersten Blasformeinrichtung und an der gegenüberliegenden Seite die Formaufspannplatte mit dem Formwerkzeug der inneren Blasformhälfte der zweiten Blasformeinrichtung angebracht sind, wobei diese mittlere Schließeinheit auf dem Maschinenrahmen bevorzugt in beide Richtungen verfahrbar angeordnet ist und wobei das Blasformsystem eine Antriebskombination mit mehreren zusammenwirkenden Antrieben umfasst.

In der DE 44 03 698 A1 ist ein Blasformsystem zur Herstellung von Hohlkörpern beschrieben, welches mit zwei Blasformeinheiten arbeitet, die jeweils auf einem Schlitten angeordnet sind, wobei beide Schlitten hintereinander angeordnet sind und linear auf Schienen verfahrbar sind, um die jeweilige Position des Schlittens gegenüber einer Extrudereinrichtung zu verändern. Jede der beiden Blasformeinheiten umfasst jeweils zwei Formhälften, die von Tragplatten getragen werden, welche wiederum an Stützen angebracht sind. Die so gebildeten Schließeneinheiten weisen je zwei Schließenhälften auf, welche bei Beaufschlagung einer Kolben-Zylinder-Einheit gegeneinander verfahrbar sind, um die Blasform zu Öffnen oder zu Schließen. Die Bewegung der beiden Schließenhälften und somit der beiden Formhälften der Blasform ist dabei, wie auch ansonsten bei derartigen Blasformsystemen üblich, immer so, dass sich beim Öffnen der Blasform beide Schließenhälften symmetrisch voneinander weg bewegen bzw. dass beim Schließen der Blasform sich beide Schließenhälften symmetrisch aufeinander zu bewegen. Damit beide Blasformeinheiten abwechselnd von nur einem Extruderkopf jeweils mit dem Vorformling bestückt werden können, ist bei diesem bekannten Blasformsystem vorgesehen, dass die jeweils zu bestückende Blasformeinheit bei geöffneter Blasform aus der Verfahrlinie heraus um eine senkrechte Achse unter den Extruderkopf schwenkt, um den Vorformling aufzunehmen. Anschließend schwenkt die Blasformeinheit zurück, die Blasform wird geschlossen und die Blasformeinheit verfährt in eine Arbeitsposition, während die zweite Blasformeinheit in die Ladeposition neben den Extruderkopf fährt und herausschwenkt, um einen Vorformling aufzunehmen.

Bei dem aus der DE 44 03 698 A1 bekannten Blasformsystem können zwar die beiden Blasformhälften einer Blasformeinrichtung beim Öffnen oder Schließen der Blasform gegeneinander verfahren werden, der Antrieb dazu ist aber so konstruiert, dass immer beide Formhälften gleichzeitig aufeinander zu oder voneinander weg verfahren. Damit sind hier keine asymmetrischen Verfahroperationen möglich. Außerdem kann hier nicht die geschlossene Blasform durch das Antriebssystem auf dem Schlitten gemeinsam in einer Richtung verfahren werden. Dazu verfährt vielmehr der gesamte Schlitten. Dies erfolgt auch nicht während des Ladevorgangs, also der Übernahme des Vorformlings am Extruderkopf, sondern es dient dazu, die gesamte Blasformeinheit aus dem Bereich des Extruders heraus zu fahren, um die zweite Blasformeinheit im Bereich des Extruders zu platzieren. Somit ist eine lineare Verschiebung der relativen Position des Schließensystems während der Ladephase, beispielsweise für eine weitere Operation an dem bereits aufgenommenen Vorformling, hier weder möglich noch vorgesehen. Die zweite Funktion, nämlich ein asymmetrisches Verfahren lediglich einer der Formhälften relativ zu der anderen Formhälfte, welche ihre Position beibehält, ist bei diesem bekannten Blasformsystem ebenfalls nicht möglich. Diese Funktion verschafft dem Blasformsystem jedoch weitere Freiheitsgrade, ermöglicht beispielsweise die Entnahme des geblasenen Hohlkörpers in der Nähe des Extruderkopfs und lässt daher kürzere Arbeitszyklen zu. Beispielsweise kann eine zentrale Artikelausgabe nach dem Blasformvorgang vorgesehen sein.

In der DE 199 27 138 C2 ist ein Blasformsystem mit den Merkmalen der eingangs genannten Gattung beschrieben, bei dem zwei Blasformstationen vorhanden sind, die beide in einer Flucht auf einem gemeinsamen Schlitten angeordnet sind, welcher insgesamt gegenüber einem Extruderkopf verfahrbar ist. Jede Blasformstation umfasst jeweils zwei Formaufspannplatten, wobei die jeweils inneren Formaufspannplatten beider Stationen mit einer fest auf dem Schlitten verankerten Säule verbunden sind. Die jeweils äußeren Formaufspannplatten beider Stationen sind über je einen Spindelantrieb auf dem Schlitten verfahrbar, so dass man zum Schließen oder Öffnen der Blasform die jeweils äußere Formhälfte jeder Station relativ gegenüber der dabei fest stehenden inneren Formhälfte verfahren kann. Außerdem ist es möglich durch Verfahren des Schlittens um einen kurzen Weg die relative Position der inneren Blasformhälfte gegenüber dem Extruderkopf zu verändern. Durch Verfahren des Schlittens können auch beide Blasformhälften einer Blasformstation gemeinsam in einer Richtung linear verfahren werden. Hier besteht allerdings bei der bekannten Vorrichtung der Nachteil, dass für die letztgenannte Operation der gesamte Schlitten verfahren werden muss und folglich ein hohes Gewicht bewegt werden muss, da dabei auch die nicht aktive zweite Blasformstation, die sich ja auf dem gleichen Schlitten befindet, mit verfährt. Einschränkungen in den Bewegungsfreiheitsgraden ergeben sich durch den konstruktiven Grundgedanken, die jeweils innere Hälfte der Blasform beider Blasformstationen an einer einzigen auf dem Schlitten festen Säule anzubringen. Für das Schließen der Blasform sind bei dieser bekannten Blasformvorrichtung zwei Operationen erforderlich, zunächst verfährt der Schlitten um den halben Schließweg und danach verfährt die äußere Blasformhälfte mittels des dieser zugeordneten Antriebs um den ganzen Schließweg in die Gegenrichtung. Es ist bei diesem bekannten Blasformsystem nicht möglich, nur die jeweils innere Blasformhälfte auf dem Schlitten zu Verfahren. Für eine Relativbewegung der inneren Blasformhälfte gegenüber dem Extruderkopf muss immer der gesamte Schlitten verfahren werden. Für eine Relativbewegung beider Blasformhälften einer Station gegeneinander kann nur jeweils die äußere Blasformhälfte verfahren werden, da die jeweils innere Blasformhälfte auf dem Schlitten fest angebracht ist.

Bei dem aus der DE 199 27 138 C2 bekannten Blasformsystem ist es auch möglich jede der beiden Blasformstationen um einen langen Weg zu Verfahren, um die jeweilige Blasformstation in eine Position unter den Extruderkopf zu fahren, in der der Vorformling aufgenommen werden kann, wobei bei dieser Operation jedoch der Schlitten mit beiden Blasformstationen in gleicher Richtung linear verfährt wie die Schließenhälften beim Schließen der Blasform verfahren.

In der DE 197 47 698 C2 bzw. der dazu parallelen US 5,975,881 A ist ein Blasformsystem der eingangs genannten Gattung beschrieben, bei dem die beiden Formträgerplatten der Blasform jeweils von Lagerböcken getragen werden, die mit Antriebsaggregaten in Form von feststehenden Gewindestangen ausgestattet sind, welche sich jeweils unterhalb der Lagerböcke befinden. Unterseitig an den Lagerböcken sind jeweils elektrische Hohlwellenmotoren mit rotierenden Gewindemuttern befestigt, so dass die Lagerböcke auf den feststehenden Gewindestangen verfahren werden können. Dadurch ist ein schnelles symmetrisches Verfahren der beiden Blasformhälften gegeneinander möglich. Weiterhin ist ein Verriegelungssystem für die Blasformhälften mit vier Kurzhub-Hydraulikzylindern vorgesehen, wobei die Hydraulikzylinder bei der Verriegelung nur einen Hubweg von ca. 50 mm zurücklegen. Bei diesem bekannten Blasformsystem können einerseits die Blasformhälften synchron gegeneinander verfahren werden, indem die Antriebsaggregate entsprechend gesteuert werden und es ist auch eine asynchrone Bewegung der Blasformhälften möglich, wobei die verschiedenen Antriebsaggregate unterschiedliche Steuerbefehle erhalten.

Das aus der DE 197 47 698 C2 bekannte Blasformsystem ist gemäß einer bevorzugten Variante für eine Zwei- oder Mehrstationen-Blasformmaschine vorgesehen, bei der nur drei Formträgerplatten vorhanden sind, so dass die mittlere Formträgerplatte an der einen Seite eine Blasformhälfte einer ersten Blasformstation hält und an der anderen Seite eine Blasformhälfte einer zweiten Blasformstation hält. Hier wird die Blasform der ersten Station geschlossen und die gesamte gekoppelte Einheit beider Stationen wird soweit verfahren, bis sich die Blasform der zweiten ebenfalls geschlossenen Station in einer Aufnahmeposition unter dem Extruder befindet. Erst dann werden die beiden Blasformhälften der zweiten Station entriegelt und beide Blasformhälften werden geöffnet, indem sie synchron auseinander fahren. Für eine der beiden Blasformhälften wird dabei ein Antrieb an dem äußeren Lagerbock der ersten Station genutzt, der somit für beide Blasformstationen vorgesehen ist. Nach dem Öffnen der zweiten Blasform wird der fertige Artikel entnommen und erst dann kann in dieser Blasformstation ein neuer Vorformling aufgenommen werden.

Bei dem aus der DE 197 47 698 C2 bekannten Blasformsystem greift im Falle einer Einstationen-Blasformmaschine der erste Antrieb an dem Lagerbock an, an dem die linke Blasformhälfte montiert ist und der zweite Antrieb greift an einem zweiten Lagerbock an, an dem die rechte Blasformhälfte montiert ist. Beide Spindelantriebe wirken somit nur jeweils auf eine Schließenhälfte der Blasform. Beide Spindelantriebe befinden sich zudem in einem Bereich unterhalb der Lagerböcke, was für eine Krafteinleitung in die gegeneinander verfahrenden Formträgerplatten und Blasformhälften vergleichsweise ungünstig ist.

Bei der aus der DE 197 47 698 C2 bekannten Variante, bei der das Blasformsystem als Zweistationen-Blasformmaschine ausgebildet ist, sind nur die beiden äußeren Lagerböcke mit jeweils einem Antriebsaggregat ausgestattet, der mittlere Lagerbock, an dem sich beide inneren Blasformhälften befinden, hat hingegen kein eigenes Antriebsaggregat. Dies bedeutet, dass die innere Blasformhälfte der rechten Blasform nur bei geschlossener linker Blasform über den Antrieb des linken äußeren Lagerbocks nach rechts verfahren werden kann, um die rechte Blasform zu schließen.

Die Aufgabe der vorliegenden Erfindung besteht darin, ein verbessertes Blasformsystem der eingangs genannten Art zur Verfügung zu stellen, welches einen einfacheren konstruktiven Aufbau aufweist und mit einer verkürzten Zykluszeit arbeiten kann.

Die Lösung dieser Aufgabe liefert ein Blasformsystem zur Herstellung thermoplastischer Hohlkörper der eingangs genannten Gattung mit den kennzeichnenden Merkmalen des Hauptanspruchs.

Erfindungsgemäß ist vorgesehen, dass die Antriebskombination eine erste an der mittleren Schließeinheit des Blasformsystems angreifende Antriebseinrichtung umfasst, mittels derer die mittlere Schließeinheit bevorzugt in beide Richtungen linear verfahrbar ist.

Im Gegensatz zum Stand der Technik sieht die erfindungsgemäße Lösung einen eigenen Antrieb vor, der an der mittleren Schließeinheit angreift, so dass diese mittels dieses Antriebs auf dem Maschinenrahmen linear in beide Richtungen verfahren werden kann. Somit kann die mittlere Schließeinheit und damit die jeweils innere Blasformhälfte von beiden Blasformeinrichtungen unabhängig von der Position der jeweiligen äußeren Blasformhälften gegenüber diesen verfahren werden. Dies hat zunächst den Vorteil, dass bei den bestimmten Verfahr-Operationen, beispielsweise zum Öffnen und Schließen der Blasform, nur eine geringere Masse bewegt werden muss.

Um Verfahroperationen der jeweils äußeren Blasformhälften durchzuführen, umfasst die Antriebskombination bevorzugt mindestens eine zweite an beiden äußeren Schließenhälften der Blasformeinrichtung angreifende Antriebseinrichtung, so dass mittels dieser zweiten Antriebseinrichtung oder der Kombination beider Antriebseinrichtungen beide äußeren Schließenhälften der ersten und der zweiten Blasformeinrichtung zum Öffnen oder Schließen der jeweiligen Blasformen in beide Richtungen gegenüber den jeweiligen inneren Schließenhälften (Blasformhälften), die durch die mittlere Schließeinheit gebildet sind, auf dem Maschinenrahmen linear gegeneinander verfahrbar sind. Anders als im Stand der Technik werden also nicht zwei separate Antriebe eingesetzt, die nur an jeweils einer äußeren Schließenhälfte angreifen, sondern mindestens ein Antrieb, der quasi die äußeren Schließenhälften miteinander verbindet, was unter anderem eine bessere Krafteinleitung ermöglicht und diverse weitere Vorteile hat.

Das Blasformsystem weist eine beiden Blasformeinrichtungen gemeinsame mittlere Schließeinheit auf, an der an einer Seite die Formaufspannplatte mit dem Formwerkzeug der inneren Blasformhälfte der ersten Blasformeinrichtung und an der gegenüberliegenden Seite die Formaufspannplatte mit dem Formwerkzeug der inneren Blasformhälfte der zweiten Blasformeinrichtung angebracht sind, wobei diese mittlere Schließeinheit auf dem Maschinenrahmen bevorzugt in beide Richtungen verfahrbar angeordnet ist. Dies vereinfacht den konstruktiven Aufbau der Blasformeinrichtung und ermöglicht eine kostengünstigere Herstellung.

Außerdem besteht die Möglichkeit durch geeignete Antriebskombinationen, bei denen ein Antrieb auch an der mittleren Schließeinheit angreift, diese in beide Richtungen zu verfahren und somit über einen Antrieb das Schließen und Öffnen der Blasformen beider Blasformeinrichtungen im Wechsel zu Betreiben, was eine kompakte und zeitsparende Zweifachfertigung ermöglicht.

Gemäß einer Weiterbildung der Aufgabenlösung kann man erfindungsgemäß verschiedene Funktionen mit den unterschiedlichen Bewegungsabläufen des Blasformsystems durch eine Antriebskombination mit mehreren zusammenwirkenden Antrieben zur Verfügung stellen, wobei diese Antriebskombination eine erste an der mittleren Schließeinheit des Blasformsystems angreifende Antriebseinrichtung umfasst, mittels derer sowohl die mittlere Schließeinheit als auch beide äußere Schließenhälften auf dem Maschinenrahmen, auf dem sie montiert sind, gemeinsam linear in gleicher Richtung verfahrbar sind, sowie mindestens eine zweite an beiden äußeren Schließenhälften der Blasformeinrichtung angreifende Antriebseinrichtung, so dass mittels dieser zweiten Antriebseinrichtung oder der Kombination beider Antriebseinrichtungen beide äußeren Schließenhälften der ersten und der zweiten Blasformeinrichtung zum Öffnen oder Schließen der jeweiligen Blasformen in beide Richtungen gegenüber den jeweiligen inneren Schließenhälften (Blasformhälften), die durch die mittlere Schließeinheit gebildet sind, auf dem Maschinenrahmen linear gegeneinander verfahrbar sind.

Man kann bei einer solchen Antriebskombination die Verfahrwege beider Antriebe überlagern, das heißt beispielsweise beide Antriebe gleichzeitig betreiben. Durch gleichzeitiges Betreiben beider Antriebseinrichtungen der Antriebskombination ist es möglich nur eine der Schließenhälften asymmetrisch gegenüber der anderen Schließenhälfte relativ zu verfahren, wobei die andere Schließenhälfte ihre Position beibehält oder auch beide Schließenhälften symmetrisch aufeinander zu oder voneinander weg zu bewegen, zum Beispiel beim Öffnen oder Schließen der einen oder der anderen Blasformeinrichtung, je nach Art und Anordnung der verwendeten Antriebe. Diese Vorgänge können erfolgen, wenn sich die Blasformeinheit in oder nahe an der Ladeposition und somit in Nähe des Extruderkopfs befindet. Die Blasformeinheit wird also nicht vollständig aus dem Arbeitsbereich des Extruders herausbewegt und kann folglich Operationen durchführen, bei denen der Extruderkopf aktiv ist. Die Wege, um erneut in eine Ladeposition zur Aufnahme eines Vorformlings zu fahren sind sehr kurz. Der Maschinenrahmen verfährt dabei nicht, sondern es verfahren immer nur entweder eine oder beide Schließenhälften auf dem Maschinenrahmen. Damit sind auch die zu bewegenden Massen bei diesen Verfahr-Operationen geringer. Beim Wechsel von oder einen auf die andere Blasformeinheit kann die mittlere Schließeinheit mit den beiden äußeren Schließenhälften gemeinsam auf dem Maschinenrahmen verfahren, der Maschinenrahmen selbst verfährt dabei nicht. Die Masse der verfahrenden Einheit ist somit reduziert. Außerdem wird der Verfahrweg, der nötig ist, dass die eine der beiden Blasformen unter den Extruderkopf gelangt zwecks Aufnahme des Vorformlings, durch die kompakte Bauweise der Vorrichtung verkürzt.

Es arbeiten also bei den Verfahr-Operationen des Blasformsystems eine nur an einer Schließenhälfte einwirkende Antriebseinrichtung, die sich beispielsweise unterhalb der Ebene der Schließenhälften befinden kann und eine an beiden Schließenhälften angreifende Antriebseinrichtung zusammen, die sich beispielsweise etwa in einer Höhe innerhalb des Umrissbereichs der beiden Schließenhälften befindet, bevorzugt etwa in Höhe der beiden Blasformhälften, wodurch sich günstigere Kräfteverhältnisse ergeben.

Bevorzugt ist es also so, dass die zweite an beiden Schließenhälften angreifende Antriebseinrichtung sich in vertikaler Richtung gesehen in Höhe der beiden Formhälften der Blasform erstreckt und beide Schließenhälften in Höhe der Blasform und/oder der Formaufspannplatten miteinander verbindet.

Bei der erfindungsgemäßen Lösung haben die Schließ-Systemplatten, wo die Formhälften der Blasform aufgespannt werden (Formaufspannplatten) durch die zweite Antriebseinrichtung eine feste Verbindung untereinander und müssen nicht im Bewegungsablauf eingekuppelt werden. Dies ist ein großer Vorteil, wodurch man schnelle Bewegungen erreichen kann und dadurch geringere Maschinen-Totzeiten auftreten. Die Schließeinheiten können beispielsweise diagonal über Spindelantriebe und Kurzhubelemente eine feste Verbindung aufweisen, so dass auch schnelle Formbewegungen gefahren werden können. Zusätzlich können über Kurzhubzylinder zeitgleich hohe Schließkräfte aufgebracht werden.

Es ist weiterhin eine Artikelentnahme und das gleichzeitige Füllen mit einem neuen Vorformling in die gleiche Blasform in der gleichen Schließeinheit möglich. Es können beispielsweise auch je nach Zyklus mehrere Schließeinheiten nacheinander gefüllt werden und es kann jeweils unter Kopf eine Artikelentnahme durchgeführt werden.

Man kann auch beispielsweise bei der Operation des Öffnens der Blasform bereits eine Schließenhälfte in eine gewünschte asymmetrische Position bringen, beispielsweise, wenn dies für die Entnahme des geblasenen Hohlköpers oder für eine zusätzliche Verformungsoperation am Hohlkörper notwendig ist. Es überlagern sich dabei mehrere Bewegungen und folglich wird der Arbeitszyklus damit verkürzt.

Bevorzugt umfasst die mindestens eine zweite Antriebseinrichtung mindestens eine Spindel, die sich durch die beiden äußeren Schließenhälften hindurch und auch durch die mittlere Schließeinheit hindurch erstreckt und bei deren Antrieb eine äußere Schließenhälfte relativ zu der anderen äußeren Schließenhälfte und/oder relativ zu der mittleren Schließeinheit verfahrbar ist.

Grundsätzlich kann man für die erste und/oder die zweite Antriebseinrichtung einen hydraulischen Antrieb oder einen Spindelantrieb oder jeweils eine Kombination aus einem hydraulischen und einem Spindelantrieb verwenden. Bevorzugt umfasst allerdings mindestens eine zweite Antriebseinrichtung eine Kombination aus hydraulischem Antrieb mit vergleichsweise kurzem Hub und einem schnellen Spindelantrieb mit vergleichsweise großem Hub.

Ein weiterer Vorteil gegenüber dem Stand der Technik gemäß DE 199 27 138 C2 liegt darin, dass erfindungsgemäß mittels der Antriebskombination sowohl die Verfahrwege der Schließenhälften zurückgelegt werden als auch die Aufbringung der Schließkraft nach dem Schließen der Blasform bewirkt wird. Dazu sind bevorzugt wenigstens ein Spindelantrieb und wenigstens ein hydraulischer Antrieb, mittels dessen die Schließkraft aufgebracht wird, achsgleich oder achsparallel montiert und in Höhe der zu verfahrenden Schließenhälften oder der Formaufspannplatten, insbesondere etwa in Höhe der Blasformen angeordnet, so dass in der Achse dieser Antriebskombination sowohl das (schnelle) Verfahren als auch die Krafteinleitung erfolgen kann.

Eine Weiterbildung der Erfindung sieht vor, dass das Blasformsystem weiterhin eine Kalibriervorrichtung für den herzustellenden Hohlkörper umfasst und eine dieser zugeordnete von den Antriebseinrichtungen für die Schließenhälften unabhängige und nicht auf der gleichen Achse verfahrende Antriebseinrichtung vorgesehen ist, mittels derer die Kalibriervorrichtung synchron mit wenigstens einer der Schließenhälften/Formhälften und unabhängig von den Schließenhälften linear verfahrbar ist. Dadurch ergibt sich der weitere Vorteil, dass man Bereiche des herzustellenden Hohlkörpers kalibrieren kann und während dieses Kalibriervorgangs eine der genannten Verfahroperationen vornimmt. Dies lässt eine Verkürzung des Arbeitszyklus zu. Die genannte Kalibriervorrichtung kann im Bereich des Blasdorns liegen und somit mit diesem Verfahren. Es handelt sich somit um eine kombinierte Einrichtung mittels derer der Blasvorgang und ein Kalibriervorgang erfolgen können.

Man kann beispielsweise die Kalibriervorrichtung synchron mit nur einer der Schließenhälften/Formhälften linear verfahrbar ausbilden, so dass die Kalibriervorrichtung bei geöffneter Blasform synchron mit der einen Schließenhälfte in eine andere Position fahren kann, während die andere Schließenhälfte ihre Position beibehält. Man kann beispielsweise auch die Kalibriervorrichtung synchron mit beiden Schließenhälften/Formhälften gegenüber dem Maschinenrahmen linear verfahrbar ausbilden, um beispielsweise bei geschlossener Blasform diese zu Verfahren und gleichzeitig zu Kalibrieren.

Beispielsweise kann die Kalibriervorrichtung wenigstens einen Dorn umfassen, welcher in Richtung senkrecht zur Verfahrrichtung der beiden Formhälften beim Öffnen/Schließen der Blasform zwischen die beiden Formhälften einfahrbar ist, um auf diese Weise z.B. einen Stutzen oder eine Öffnung des Hohlkörpers zu kalibrieren. Dies ist beispielsweise dann erforderlich, wenn diese Öffnung später ein weiteres Bauteil aufnimmt, so dass eine hohe Maßgenauigkeit gefordert ist.

Gemäß einer bevorzugten Weiterbildung der vorliegenden Erfindung umfasst die zweite Antriebseinrichtung neben mindestens einer sich durch die beiden äußeren Schließenhälften und die mittlere Schließeinheit erstreckenden Spindel mindestens eine weitere zu dieser parallele weiter oben angeordnete Spindel, die die gleichen Operationen durchführt wie die untere Spindel. Dies ermöglicht ein stabileres Verfahren und einen gleichmäßigeren Kraftangriff oben und unten an den Schließensystemen.

Gemäß einer bevorzugten Weiterbildung der vorliegenden Erfindung ist vorgesehen, dass das Blasformsystem mindestens zwei Blasformstationen mit jeweils zwei Schließenhälften umfasst und jede dieser Blasformstationen auf ihrem jeweiligen Maschinenrahmen mittels eines Antriebs entlang einer Führung in eine Position unter dem Extruderkopf verfahrbar ist, im rechten Winkel zur Verfahrrichtung der Schließenhälften beim Schließen der Blasform. Anders als im Stand der Technik erfolgt somit der Wechsel von einer auf die andere Blasformstation durch ein Verfahren des jeweiligen Maschinenrahmens quer zur Verfahrrichtung der Blasformhäften beim Schließen oder Öffnen der Blasform.

Gegenstand der vorliegenden Erfindung ist weiterhin ein Blasformverfahren zur Herstellung von Hohlkörpern, bei dem jeweils die beiden die Formhälften einer Blasformeinrichtung tragenden Schließenhälften zwecks Öffnen bzw. Schließen der jeweiligen Blasform gegeneinander verfahrbar sind, insbesondere unter Verwendung eines Blasformsystems der zuvor beschriebenen Art, wobei dieses Verfahren wenigstens einen Schritt umfasst, in dem eine mittlere Schließeinheit, welche zwei Blasformeinrichtungen eines Blasformsystems zugeordnet ist, auf dem Maschinenrahmen des Blasformsystems linear in einer Richtung verfährt, wobei gleichzeitig die äußere Schließenhälfte einer ersten Blasformeinrichtung in die Gegenrichtung verfährt, so dass die Blasform dieser ersten Blasformeinrichtung geöffnet oder geschlossen wird, wobei gleichzeitig die Blasform einer zweiten Blasformeinrichtung in gleicher Richtung auf dem Maschinenrahmen verfährt wie die mittlere Schließeinheit. Durch diese Vorgehensweise wird das Betreiben beider Blasformeinrichtungen des Systems im Wechsel vereinfacht und eine kompakte Zweifachfertigung möglich. Die Kosten für die Fertigung des Blasformsystems verringern sich, da eine Formaufspannplatte (auch als Holmträgerplatte oder Joch bezeichnet) quasi entfallen kann, denn die mittlere Schließeinheit übernimmt eine doppelte Funktion. Außerdem kann ein separates Verfahren für die Artikelentnahme eines fertigen Hohlkörpers entfallen. Die Entnahme kann insbesondere bei der Fertigung langer Hohlkörper, wie diese beispielsweise im Saugblasverfahren hergestellt werden, seitlich durch einen zentralen Greifer oder einen Roboter durchgeführt werden.

Gemäß einer Weiterbildung des Verfahrens kann beispielsweise beim konventionellen Blasverfahren eine Grundplatte für eine Spreize, eine Pinole oder Vorschweißzange entsprechend den Schließbewegungen und/oder synchron mit der Extrusion bzw. dem Kopfspeicher verfahren werden und beispielsweise in der Position unter Kopfspeicher am Grundgestell fixiert werden.

Durch das erfindungsgemäße Verfahren sind Öffnungspositionen möglich, die genügend Raum für eine Artikelentnahme zulassen, während bereits wieder der nächste Vorformling für den neuen Blasvorgang aufgenommen wird. Dies ist ein wesentlicher Vorteil, der die Zykluszeit verkürzt. Dagegen ist im Stand der Technik die Artikelentnahmestation zugleich auch die Position unter dem Extruderkopf für die Aufnahme des neuen Vorformlings. Der Zyklus verlängert sich daher bei dem bekannten System, da der neue Vorformling erst aufgenommen werden kann, nachdem der zuvor geblasene Hohlkörper entnommen wurde.

Das erfindungsgemäße Blasformverfahren umfasst insbesondere wenigstens einen Schritt, in dem eine in den Formhohlraum hinein ragende Kalibriervorrichtung für den herzustellenden Hohlkörper bei geschlossenen Schließenhälften mittels einer dieser zugeordneten Antriebseinrichtung synchron mit wenigstens einer der Schließenhälften/Formhälften linear verfährt. Alternativ kann auch das Nadeleinschießen erfolgen, welches beim Saugblasen eingesetzt wird.

Das erfindungsgemäße Blasformverfahren kann beispielsweise auch zwei Schrittte umfassen, in denen jeweils bei geöffneten Schließenhälften der Blasformeinrichtung nur eine Schließenhälfte gegenüber der anderen Schließenhälfte linear verfährt, während die andere Schließenhälfte ihre Position beibehält. Vorteilhaft ist insbesondere, dass beide äußeren Schließenhälften voneinander unabhängig jeweils gegenüber der mittleren Schließeinheit verfahren werden können, ohne dass dabei große Massen bewegt werden müssen.

Die für das erfindungsgemäße Verfahren verwendete Antriebskombinationen lässt auch Operationen zu, bei denen die beiden Schließenhälften beim Öffnen oder Schließen der Blasform linear auseinander fahren und dabei einen unterschiedlichen Verfahrweg zurücklegen (asymmetrisches Öffnen oder Schließen der Blasform.) Dadurch kann man beispielsweise bei der Operation des Öffnens der Blasform bereits eine der Schließenhälften in eine gewünschte asymmetrische Position bringen, beispielsweise, wenn dies für die Entnahme des geblasenen Hohlkörpers oder für eine zusätzliche Verformungsoperation am Hohlkörper notwendig ist. Es überlagern sich dabei mehrere Bewegungen und folglich wird der Arbeitszyklus damit verkürzt.

Ein hier nur beispielhaft genannter Ablauf eines Blasformverfahrens, welches mit dem erfindungsgemäßen Blasformsystem durchgeführt werden kann, sieht die nachfolgenden Schritte vor:
- die erste Blasformeinrichtung nimmt am Extruderkopf einen Vorformling auf, während in der sich daneben befindlichen zweiten Blasformeinrichtung ein Hohlkörper ausgeformt und/oder gekühlt wird;
- die beiden Schließenhälften der zweiten Blasformeinrichtung fahren auseinander und diese Form wird geöffnet, wobei die Form der ersten Blasformeinrichtung geschlossen ist und in dieser ein Hohlkörper ausgeformt und/oder gekühlt wird;
- der geblasene Hohlkörper wird aus der Form der zweiten Blasformeinrichtung entnommen;
- die gesamte Anordnung aus der mittleren Schließeinheit und der ersten geschlossenen Blasformeinrichtung verfährt gemeinsam linear auf dem Maschinenrahmen in eine Position, in der die zweite Blasformeinrichtung unter dem Extruderkopf steht und die zweite Blasformeinrichtung nimmt einen Vorformling auf;
- nach Beendigung der Aufnahme des Vorformlings an der zweiten Blasformeinrichtung wird die Form der ersten Blasformeinrichtung geöffnet und der geblasene Hohlkörper wird aus dieser Form entnommen;
- die gesamte Anordnung aus der mittleren Schließeinheit und der zweiten geschlossenen Blasformeinrichtung verfährt gemeinsam linear auf dem Maschinenrahmen in eine Position, in der die erste Blasformeinrichtung unter dem Extruderkopf steht und erneut einen Vorformling aufnehmen kann und ein neuer Blasformzyklus kann sich anschließen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Seitenansicht eines Ausschnitts aus einem erfindungsgemäßen Blasformsystem im teilweisen Schnitt;
Figur 2 eine schematisch vereinfachte Seitenansicht eines Ausschnitts aus einem erfindungsgemäßen Blasformsystem in einer bestimmten Phase des Blasformzyklus;
Figur 3 eine ähnliche schematisch vereinfachte Seitenansicht eines Ausschnitts aus einem erfindungsgemäßen Blasformsystem, wobei die rechte Blasform geöffnet ist;
Figur 4 eine ähnliche schematisch vereinfachte Seitenansicht eines Ausschnitts aus einem erfindungsgemäßen Blasformsystem nach Entnahme des Hohlkörpers aus der rechten Blasform;
Figur 5 eine weitere schematisch vereinfachte Seitenansicht eines Ausschnitts aus einem erfindungsgemäßen Blasformsystem in einer anderen Phase des Blasformzyklus;
Figur 6 eine ähnliche schematisch vereinfachte Seitenansicht eines Ausschnitts aus einem erfindungsgemäßen Blasformsystem in einer anderen Phase des Blasformzyklus;
Figur 7 eine weitere schematisch vereinfachte Seitenansicht eines Ausschnitts aus einem erfindungsgemäßen Blasformsystem in einer anderen Phase des Blasformzyklus, wobei die linke Blasform geöffnet ist;
Figur 8 eine ähnliche schematisch vereinfachte Seitenansicht eines Ausschnitts aus einem erfindungsgemäßen Blasformsystem nach der Entnahme des Hohlkörpers aus der linken Blasform;
Figur 9 eine weitere schematisch vereinfachte Seitenansicht eines Ausschnitts aus einem erfindungsgemäßen Blasformsystem, wobei die linke Blasform unter den Extruderkopf gefahren wurde;
Figur 10 eine schematisch vereinfachte Vorderansicht des gesamten erfindungsgemäßen Blasformsystems, von dem in Figur 1 nur ein Ausschnitt dargestellt ist;
Figur 11 eine Draufsicht auf das in Figur 10 gezeigte Blasformsystem;
Figur 12 eine Seitenansicht des Blasformsystems gemäß den Figuren 10 und 11.

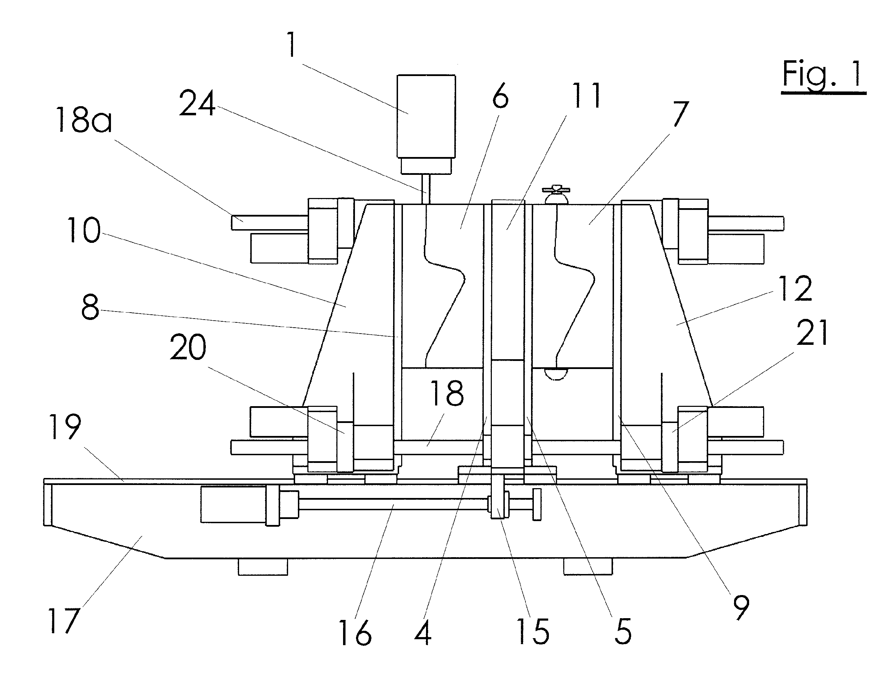

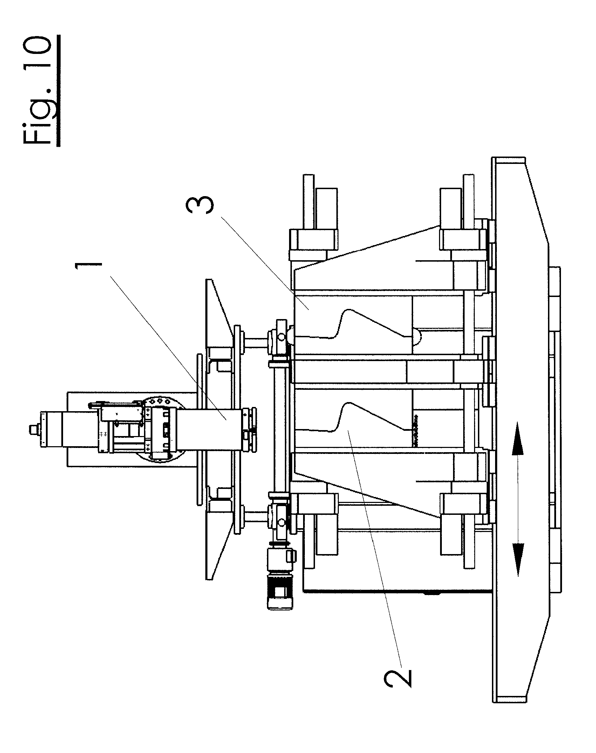

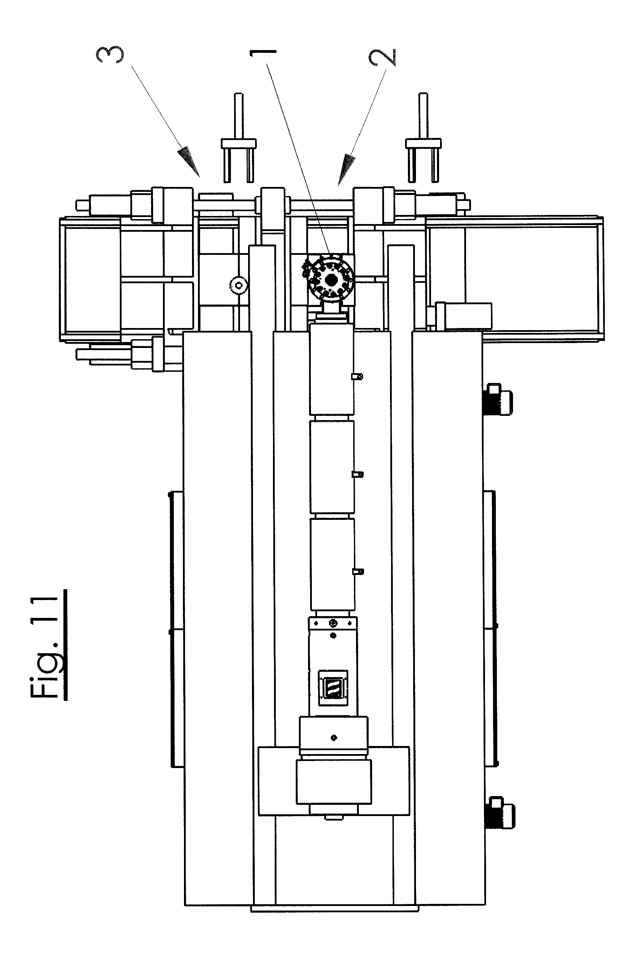

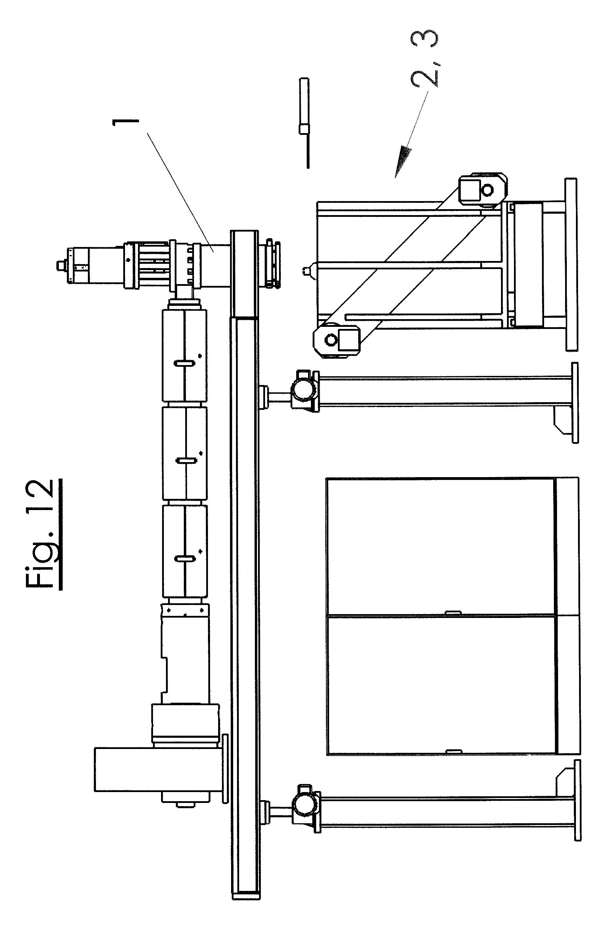

Zunächst wird auf die Figuren 10 bis 12 Bezug genommen und anhand dieser wird der generelle Aufbau eines beispielhaften Blasformsystems gemäß der vorliegenden Erfindung beschrieben, welches eine Blasformstation mit zwei Blasformeinrichtungen aufweist. Es ist ein Extruder mit Extruderkopf 1 dargestellt, welcher den Schlauch (Vorformling) ausstößt, der dann in einer der beiden Blasformstationen zum Hohlkörper geblasen wird. In den Figuren 10 und 11 sind die beiden Blasformeinrichtungen 2 und 3 erkennbar, die hier nebeneinander liegen. In Figur 12 liegen die beiden Blasformeinrichtungen 2 und 3 senkrecht zur Zeichenebene hintereinander. Man sieht hier, dass für die Blasformeinrichtungen so genannte diagonale Schließen verwendet werden. In Figur 10 befindet sich die linke Blasformeinrichtung 2 in der zentralen Position unter dem Extruderkopf, in der der Vorformling aufgenommen werden kann. Die zweite rechte Blasformeinrichtung 3 wurde in eine seitliche Position verfahren, in der der Artikel aufgeblasen werden kann. Beide Blasformeinrichtungen 2, 3 sind auf einem gemeinsamen Maschinenrahmen 17 angeordnet und auf diesem mittels eines Antriebs entlang einer Führung (zum Beispiel auf Schienen) in Richtung des Doppelpfeils in Figur 10 verfahrbar. Jede der beiden Blasformeinrichtungen weist jeweils zwei Schließenhälften mit den Blasformhälften auf, die zum Öffnen bzw. Schließen der Blasform über entsprechende Antriebe gegeneinander verfahrbar sind, wie später noch unter Bezugnahme auf die Figuren 1 bis 9 im Detail näher erläutert wird. In Figur 10 sind beide Blasformeinrichtungen 2 und 3 in einer geschlossenen Position der beiden Schließenhälften dargestellt. Beim Öffnen und Schließen der Blasform ist die Verfahrrichtung der jeweiligen Schließenhälften der Blasformeinrichtung voneinander weg bzw. aufeinander zu auf dem jeweiligen Maschinenrahmen 17 jeweils in Richtung der Doppelpfeile in Figur 10.

Es wird in der Regel ein hier nicht dargestellter Roboter verwendet, der den geblasenen Hohlkörper aus der Blasform entnimmt. Wie man in den Figuren 11 und 12 erkennt, kann ein solcher Roboter beispielsweise von der Seite her (also quer zur Verfahrrichtung der Schließen) in die geöffnete Blasform eingreifen, um den geblasenen Artikel zu entnehmen, obwohl sich der Extruderkopf des Extruders in einer Position über den beiden Blasformeinrichtungen 2, 3 befindet, so dass der neue Vorformling für den nächsten Blasvorgang an der einen Blasformeinrichtung aufgenommen werden kann, noch während der Roboter den fertig geblasenen Artikel an der anderen Blasformeinrichtung entnimmt. Dies ist durch das seitliche Verfahren der einen Blasformeinrichtung möglich, da damit der geblasene Artikel in eine vom Extruderkopf entfernte Position außerhalb dessen Arbeitsbereichs gelangt.

Nachfolgend wird auf die Figur 1 Bezug genommen und anhand dieser wird der Aufbau eines erfindungsgemäßen Blasformsystems mit zwei Blasformeinrichtungen näher im Detail erläutert.

Die Darstellung zeigt eine schematisch vereinfachte Seitenansicht einer der Blasformstationen des erfindungsgemäße Blasformsystems in vergrößertem Maßstab im teilweisen Schnitt. Diese Blasformstation umfasst ein doppeltes Blasformsystem mit zwei Blasformeinrichtungen, die miteinander quasi zu einem Drei-Platten-System kombiniert sind. Man erkennt die beiden Schließenhälften 10, 12, an deren innenseitigen vertikalen Flächen sich jeweils die äußeren Tragplatten (Formaufspannplatten) 8, 9 für die jeweils äußeren Formhälften der linken und der rechten Blasform befinden, wobei die linke Blasform mit 6 bezeichnet ist und die rechte Blasform mit 7 bezeichnet ist und wobei eine Position des Blasformsystems dargestellt ist, in der sich beide Blasformen im geschlossenen Zustand befinden. Zwischen den beiden äußeren Schließenhälften 10 und 12 befindet sich die mittlere Schließeinheit 11, an welcher sich links und rechts jeweils Formaufspannplatten 4 und 5 befinden, und zwar die innere Formaufspannplatte 4 der linken Blasformeinheit, an der die rechte innere Hälfte der linken (ersten) Blasform 6 angebracht ist und die innere Formaufspannplatte 5 der rechten Blasformeinheit, an der die linke innere Hälfte der rechten (zweiten) Blasform 7 angebracht ist. Es ist also ein Blasformsystem mit kompakter Bauweise vorhanden, dadurch dass die mittlere Schließeinheit 11 für die beidseitige Anbringung von zwei Formaufspannplatten 4, 5 genutzt wird.

Zum Öffnen der linken Blasform 6 verfährt die linke äußere Schließenhälfte 10 nach links und die mittlere Schließeinheit verfährt nach rechts, während zum Öffnen der rechten Blasform 7 die rechte äußere Schließenhälfte 12 nach rechts verfährt und die mittlere Schließeinheit 11 nach links verfährt. Die mittlere Schließeinheit übernimmt somit eine doppelte Funktion, wodurch zum einen der konstruktive Aufwand der Blasformvorrichtung reduziert wird und wodurch sich außerdem verkürzte Verfahrwege ergeben.

Die erfindungsgemäße Antriebskombination umfasst einen ersten Antrieb, welcher unterseitig an einer Strebe 15 der mittleren Schließeinheit 11 angreift und beispielsweise eine Spindel 16 aufweist, so dass die mittlere Schließeinheit 11 auf diese Weise über eine Spindelmutter durch Rotation der Spindel 16 linear in Längsrichtung (in der Zeichnung nach rechts oder links) auf dem Maschinenrahmen 17, auf dem das Blasformsystem montiert ist, verfahrbar ist. Die Antriebskombination umfasst außerdem einen zweiten Antrieb mit einer zweiten Spindel 18, die so lang ist, dass sie sich durch die beiden äußeren Schließenhälften 10, 12 und auch durch die mittlere Schließeinheit 11 hindurch erstreckt und die sich dabei oberhalb der ersten Spindel 16 und parallel zu dieser erstreckt. Durch Antreiben dieser zweiten Spindel 18 kann man die wahlweise entweder die relative Position der äußeren rechten Schließenhälfte 12 zur mittleren Schließeinheit 11 oder die relative Position der äußeren linken Schließenhälfte 10 zur mittleren Schließeinheit verändern und diese jeweils in linearer Bewegung beispielsweise geführt auf Schienen 19 in Längsrichtung auf dem Maschinenrahmen 17 verfahren. Zusätzlich kann der zweite Antrieb jeweils links und rechts einen Hydraulikzylinder 20, 21 umfassen, der die Schließeneinrichtung beaufschlagt und dessen Hub mit demjenigen der zweiten Spindel 18 kombiniert werden kann, was den Vorteil hat, dass man in rascher Bewegung mittels der Spindel 18 einen vergleichsweise großen Hub zurücklegen kann, um dann anschließend über den jeweiligen Hydraulikzylinder 20, 21 mit einem vergleichsweise kurzen Hub aber mit hoher Kraft die letzte Strecke der Schließbewegung beim Zufahren der Schließe zurückzulegen und somit eine hohe Schließkraft aufzubringen.

Zusätzlich zu der unteren Spindel 18 kann eine zu dieser parallele weitere obere Spindel 18 a, vorhanden sein, die jeweils die gleichen Operationen durchführt wie die Spindel 18 und die sich auch durch die beiden äußeren Schließenhälften 10, 12 und die mittlere Schließeinheit 11 hindurch erstreckt, um ein stabileres Verfahren zu ermöglichen und einen gleichmäßigeren Kraftangriff oben und unten an den Schließensystemen zu schaffen.

Bei Verwendung von je einer Spindelmutter für jede der Schließenhälften 10, 12 und die mittlere Schließeinheit 11 kann man bei Drehung der Spindel 18 (und 18 a) beide Schließenhälften symmetrisch aufeinander zu fahren, z. B. beim Schließen der Blasform oder voneinander weg fahren, z.B. beim Öffnen der Blasform. Da man die Bewegung des Spindelantriebs der Spindel 18 mit der Bewegung der ersten Spindel 16 überlagern kann, durch zeitgleiches Antreiben beider Spindeln, sind Bewegungsmuster möglich, bei denen sich beispielsweise zwei Schließenhälften einer der Blasformen aufeinander zu bewegen und sich gleichzeitig die Anordnung der Schließe insgesamt auf dem Maschinenrahmen 17 linear in einer Richtung verschiebt. Wenn man hingegen beispielsweise nur die Spindel 18 antreibt, kann man eine Bewegung erzeugen, bei der allein eine der äußeren Schließenhälften 10, 12 linear gegenüber der mittleren Schließeinheit 11 verfährt, während die jeweils andere äußere Schließenhälfte ihre Position beibehält. Wenn man nur die Spindel 16 antreibt, erhält man eine Bewegung, bei der die Anordnung des ganzen Schließensystems mit den beiden äußeren Schließenhälften 10, 12 und der mittleren Schließeinheit 11 in einer Richtung auf dem Maschinenrahmen linear verfährt, der Abstand aller Schließen zueinander aber gleich bleibt, beispielsweise wenn die ganze Anordnung mit beiden Blasformen im geschlossenen Zustand auf dem Maschinenrahmen 17 gegenüber dem Extruderkopf 1 verfährt.

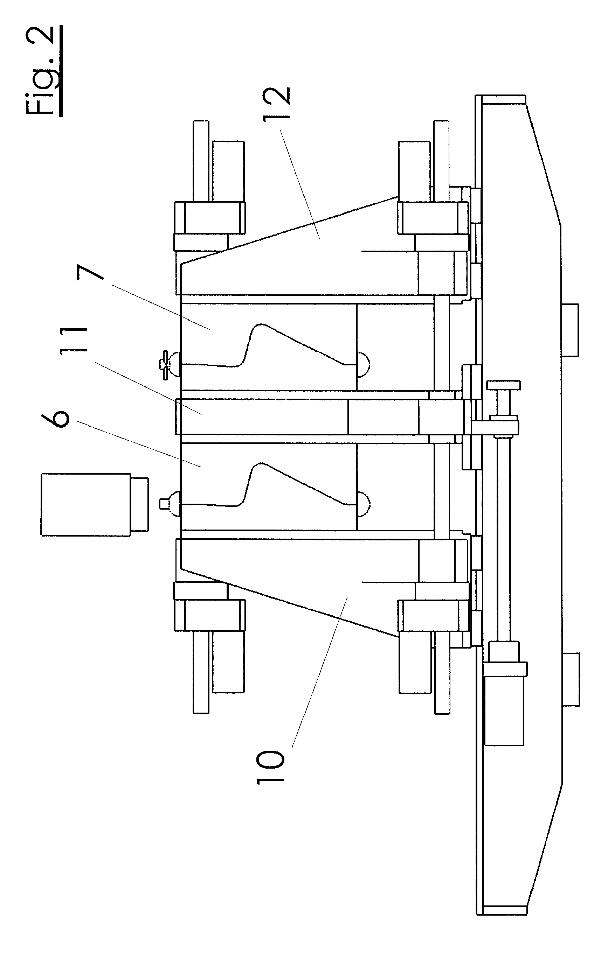

Nachfolgend werden anhand der Figuren 2 bis 9 beispielhafte Bewegungsabläufe bei Verwendung eines erfindungsgemäßen Blasformsystems erläutert. Figur 2 zeigt eine schematisch vereinfachte Seitenansicht eines erfindungsgemäßen Blasformsystems, welches im Prinzip wie das zuvor beschriebene System aufgebaut ist, in einer Stellung in der die Blasformen 6 und 7 beider Blasformeinheiten geschlossen sind. In Figur 1 ist gezeigt wie der schematisch eingezeichnete Vorformling 24 am Extruderkopf ausgestoßen wird, um die linke der beiden Blasformen 6 zu beladen, danach wurde die Blasform 6 zugefahren und der Hohlkörper kann nun ausgeformt werden. Der zu formende Hohlkörper befindet sich in Figur 1 und Figur 2 zwischen den beiden Blasformhälften der linken Blasform 6, wobei die linke Blasform geschlossen ist, was möglich ist, da es sich bei dem hier dargestellten Verfahren um die Saug-Blas-Variante handelt. In der in Figur 2 dargestellten Phase ist die Aufnahme des Vorformlings in der linken Blasform 6 beendet. Die rechte Blasform 7 ist ebenfalls geschlossen und enthält einen Hohlkörper, der ausgeblasen bzw. anschließend abgekühlt wird.

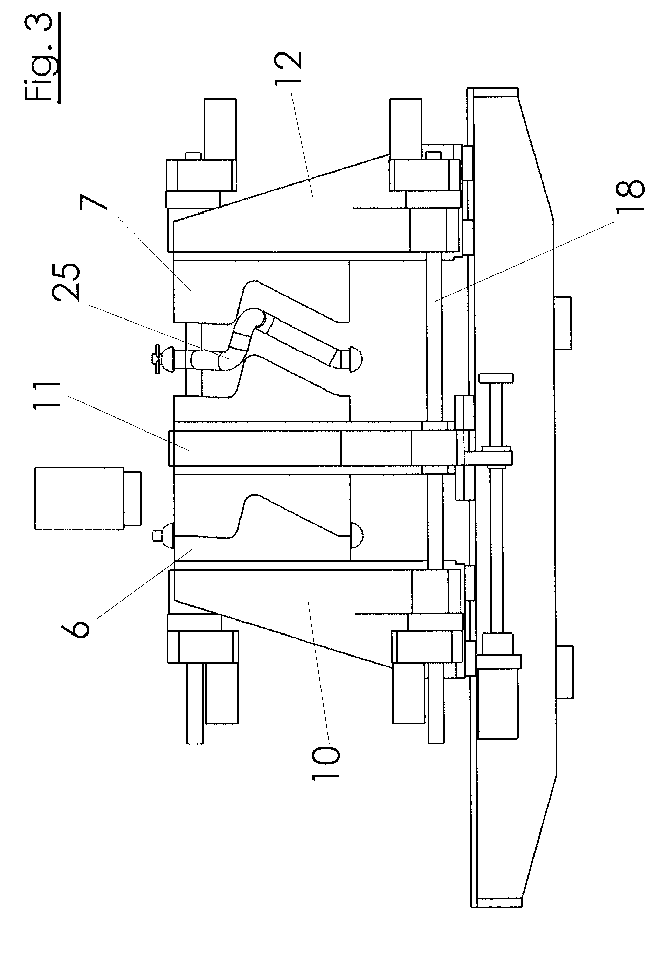

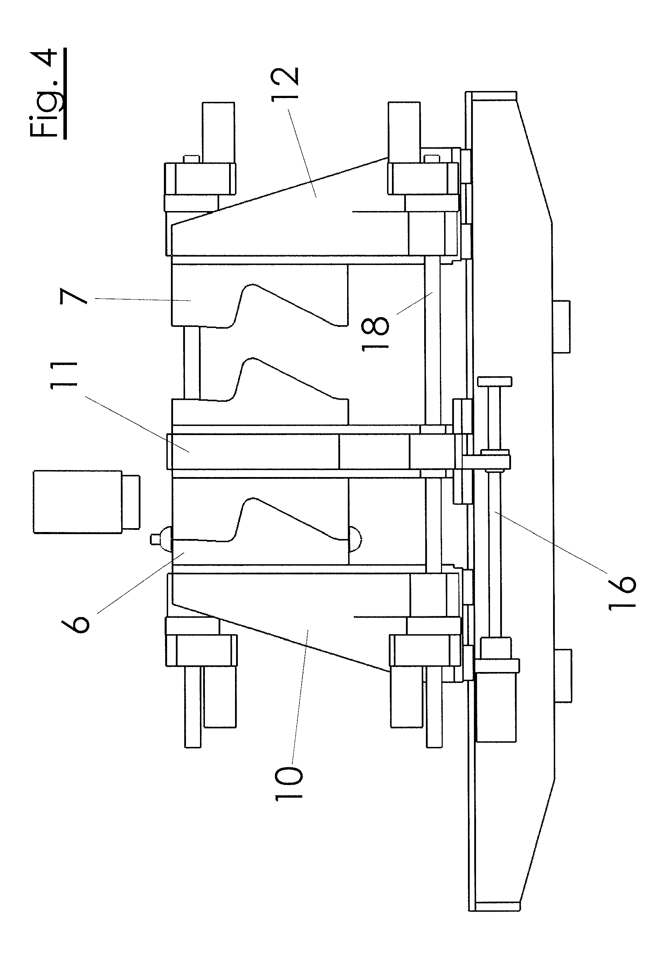

Nachdem der Hohlkörper in der rechten Blasform 7 ausgeformt und abgekühlt ist, wird diese ausgehend von der Position gemäß Figur 2 geöffnet, was in Figur 3 dargestellt ist. Dazu wird nun bei geschlossener linker Blasform 6 ausgehend von Figur 2 die mittlere Schließeinheit 11 mit der linken äußeren Schließenhälfte 10 linear auf dem Maschinenrahmen 17 in Längsrichtung (in der Zeichnung nach links) verfahren in die in Figur 3 dargestellte Position, wobei gleichzeitig die rechte äußere Schließenhälfte 12 nach rechts verfahren wird. Dadurch wird in Figur 3 eine Position erreicht, in der der fertige Hohlkörper 25 aus der offenen rechten Blasform 7 beispielsweise mittels einer Greifvorrichtung eines Roboters in Querrichtung, das heißt seitlich zur Verfahrrichtung der Blasformen entnommen werden kann. Diese Position nach der Entnahme des Hohlkörpers 25 ist in Figur 4 dargestellt.

Durch Vergleich der Figuren 2 und 3 erkennt man, dass beim Öffnen der rechten Blasform 7 die Spindel 18 angetrieben wird und die rechte äußere Schließenhälfte 12 in der Zeichnung nach rechts (nach außen) bewegt. Gleichzeitig wird dabei die Spindel 16 angetrieben, die die mittlere Schließeinheit 11 nach links verfährt. Da die linke äußere Schließenhälfte dabei mit der mittleren Schließeinheit 11 verfährt und somit ihre relative Position gegenüber der mittleren Schließeinheit 11 beibehält, bleibt die linke Blasform 6 geschlossen. Der Vorgang der Ausformung und Kühlung des Hohlkörpers in der linken Blasform 6 kann somit andauern, während die rechte Blasform in die Öffnungsposition verfährt und der fertige Hohlkörper 25 aus der rechten Blasform 7 entnommen wird.

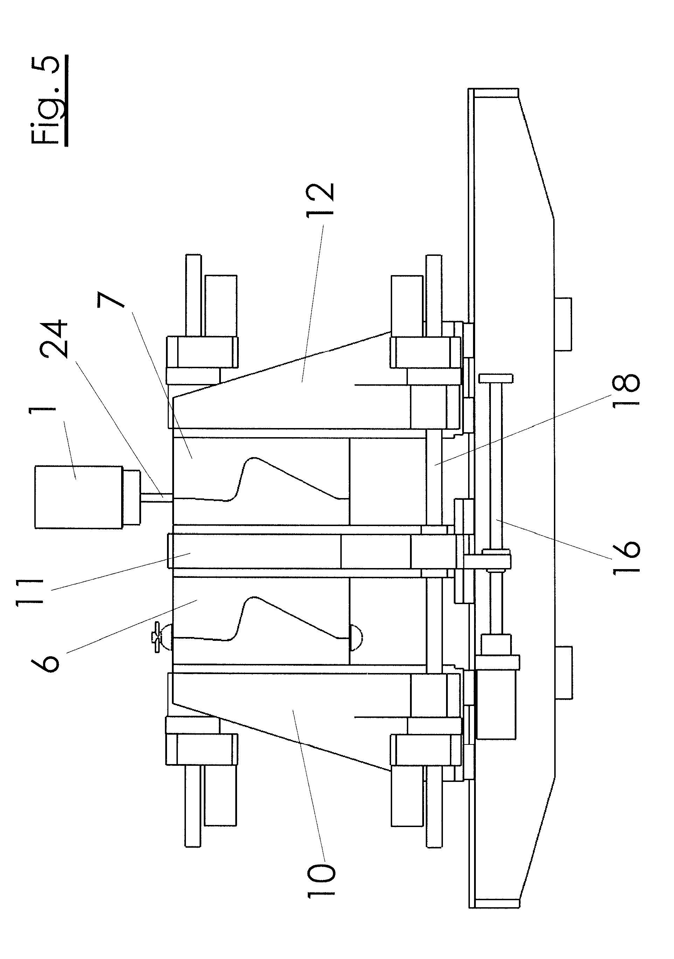

Nach der Entnahme des Hohlkörpers 25 aus der rechten Blasform verfährt nun die Anordnung mit den beiden äußeren Schließenhälften 10, 12 und der mittleren Schließeinheit 11 auf dem Maschinenrahmen 17 aus der in Figur 4 dargestellten Position in der Zeichnung nach links in die Position gemäß Figur 5, wobei gleichzeitig die rechte Blasform 7 geschlossen wird. Der Vergleich der Figuren 4 und 5 zeigt, dass dabei zum einen die mittlere Schließeinheit 11 mittels der Spindel 16 nach links verfahren wird, wobei die linke äußere Schließenhälfte 10 und die geschlossene Blasform 6 mit verfahren. Die Blasform 6 bleibt geschlossen und der Vorgang der Ausformung des Hohlkörpers in dieser Blasform kann andauern. Gleichzeitig wird die Spindel 18 angetrieben, so dass die äußere rechte Schließenhälfte 12 in der Zeichnung nach links verfährt und somit auf die mittlere Schließeneinheit 11 zufährt. Es ergibt sich damit eine Bewegung, bei der die rechte Blasform 7 geschlossen wird und gleichzeitig die rechte Blasform seitlich verfährt, so dass sie in eine Postion unter den Extruderkopf 1 gelangt, wir man in Figur 5 erkennt. Dies macht es möglich, dass die rechte Blasform 7 bereits wieder einen Vorformling 24 aufnehmen kann.

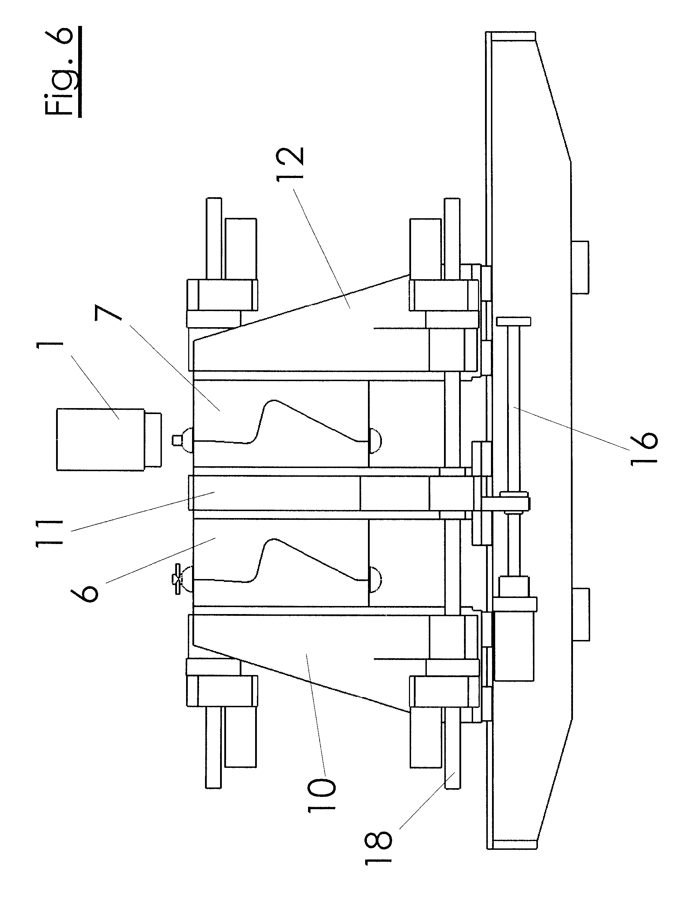

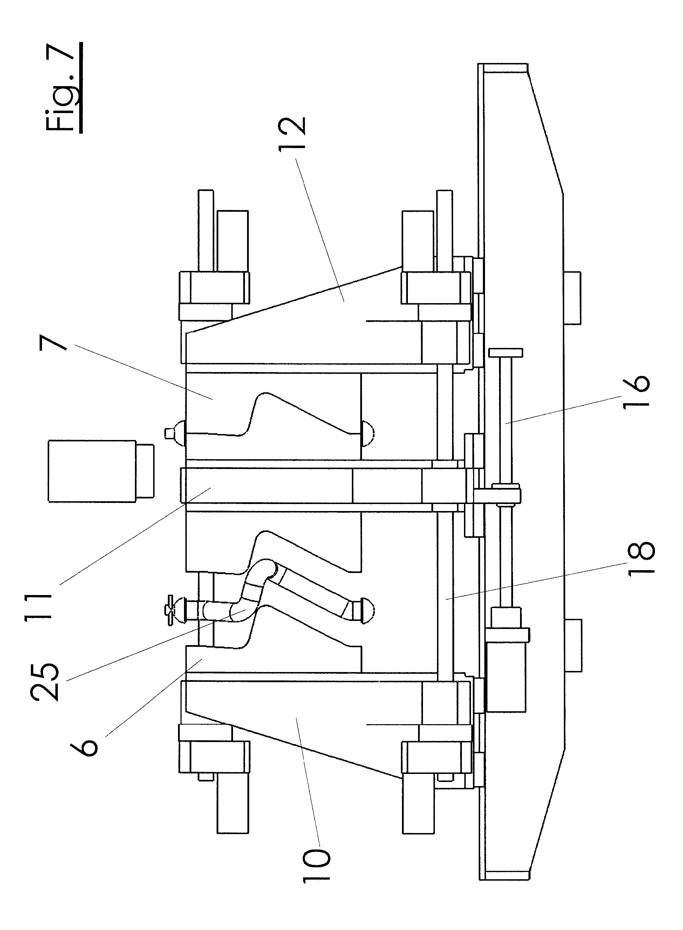

Die Phase nach der Aufnahme des Vorformlings 24 ist in Figur 6 gezeigt. Die rechte Blasform 7 befindet sich noch unter dem Extruderkopf 1. Der Vorgang der Ausformung des Hohlkörpers 7 in der rechten Blasform 7 kann beginnen. Sobald dann der Hohlkörper in der linken Blasform 6 abgekühlt ist, kann die linke Blasform geöffnet werden, wie dies in Figur 7 dargestellt ist. Es erfolgt dazu ausgehend von der Position gemäß Figur 6 eine symmetrische Öffnungsbewegung der linken Blasform 6, denn die linke äußere Schließenhälfte 10 fährt mittels der Spindel 18 den halben Öffnungsweg nach links, während außerdem die mittlere Schließeinheit 11 mittels der Spindel 16 um den halben Öffnungsweg der Blasform nach rechts verfahren wird. Da die rechte Blasform 7 geschlossen ist, fährt sie dabei mit der mittleren Schließeinheit 11 und der rechten äußeren Schließenhälfte 12 nach rechts.

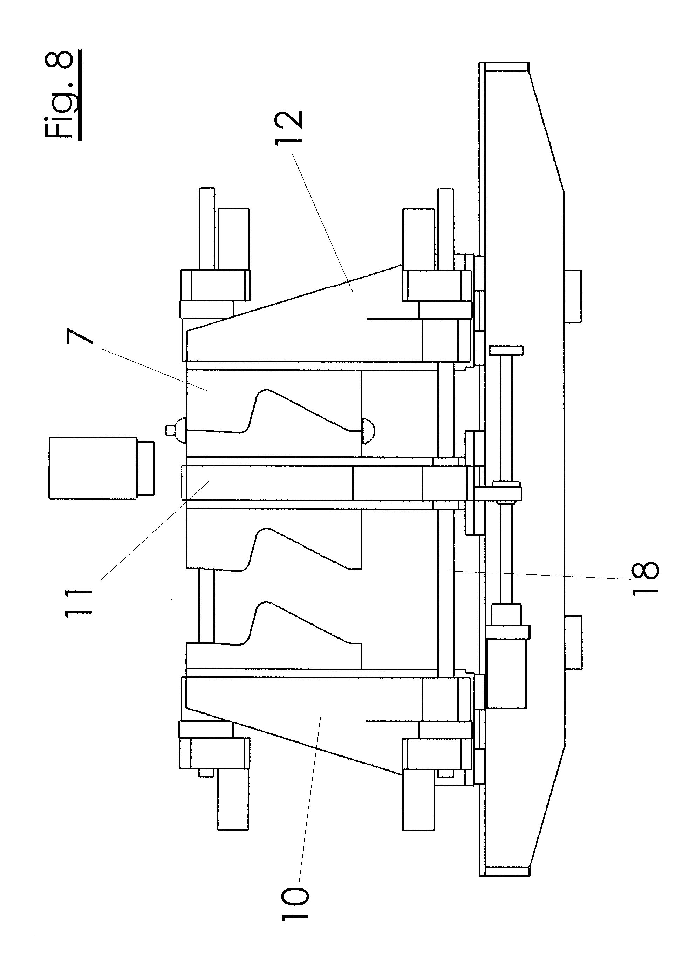

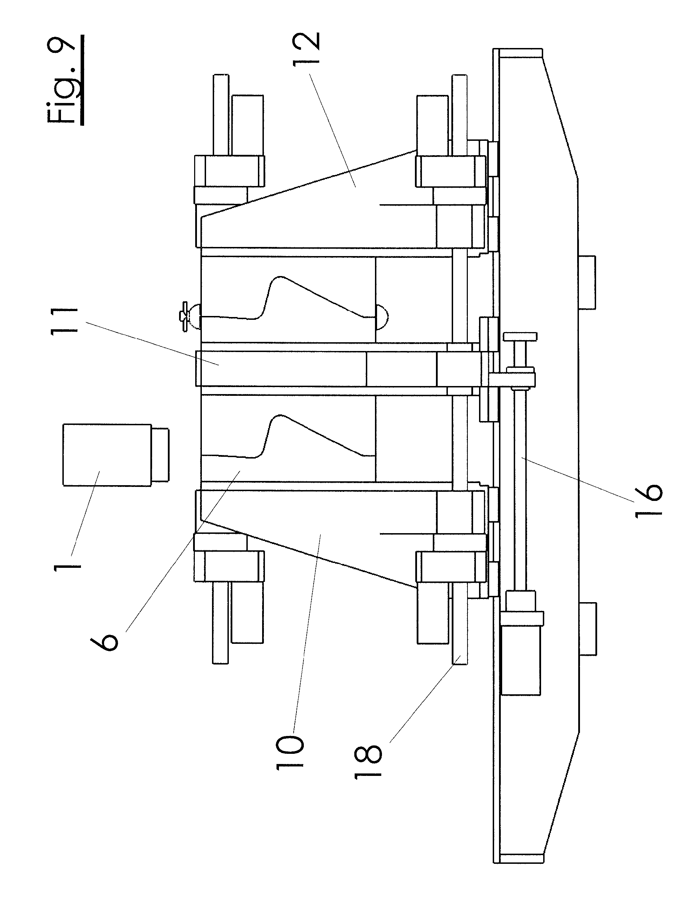

Nun kann der fertig geblasene Hohlkörper 25 aus der geöffneten linken Blasform 6 entnommen werden. Der Zustand nach dieser Entnahme ist in Figur 8 dargestellt. Die rechte Blasform 7 bleibt geschlossen, der Hohlkörper in dieser Blasform kann weiter ausgeformt werden. Damit die linke Blasform erneut mit einem Vorformling bestückt werden kann, fährt die Schließenanordnung aus der Position gemäß Figur 8 in die Position gemäß Figur 9, wobei gleichzeitig die linke Blasform 6 geschlossen wird. Dazu wird zum einen die mittlere Schließeinheit 11 mittels der Spindel 16 in der Zeichnung nach rechts verfahren und außerdem wird die linke äußere Schließenhälfte 10 mittels der Spindel 18 gegenüber der mittleren Schließeinheit 11 nach rechts verfahren, so dass sich der Verfahrweg für die linke äußere Schließenhälfte 10 addiert, die linke Blasform 6 geschlossen wird und gleichzeitig wieder in eine Position unter den Extruderkopf 1 gelangt, wo sie erneut einen Vorformling aufnehmen kann. An diese in Figur 9 dargestellte Phase kann sich ein neuer Blasform-Zyklus anschließen, dessen Ausgangsposition in Figur 1 dargestellt ist.

Die erfindungsgemäße Vorgehensweise hat den Vorteil, dass nur die genannten Bauteile verfahren werden, nicht aber der Maschinenrahmen 17 selbst oder gar eine zweite Blasformstation wie im Stand der Technik. Die zu bewegende Masse ist bei der erfindungsgemäßen Lösung wesentlich geringer. Durch die teilweise Parallelität mehrerer Prozessschritte wird die Gesamtzykluszeit verkürzt.

Die mittlere Schließeinheit 11 übernimmt die Funktion der linken Schließenhälfte der rechten Blasform 7 und diejenige der rechten Schließenhälfte der linken Blasform 6. Die Antriebskombination mit den Spindeln 16, 18 ist so ausgebildet, dass die äußeren Schließenhälften 10, 12 jeweils unabhängig voneinander gegenüber der mittleren Schließeinheit 11 verfahren werden können. Außerdem sind auch Verfahroperationen möglich, bei denen die gesamte Schließenanordnung auf dem Maschinenrahmen 17 verfährt, indem die mittlere Schließeinheit 11 verfahren wird, wobei nur eine oder auch beide äußeren Schließenhälften 10, 12 ihre relative Position zur mittleren Schließeinheit beibehalten können. Dadurch sind asymmetrische Verfahroperationen möglich ebenso wie das symmetrische Öffnen oder Schließen der einen oder der anderen Blasform. Weiterhin ist das Verfahren beider Blasformen in die Aufnahmeposition unter dem Extruderkopf möglich ebenso wie das Verfahren beider Blasformen in Positionen außerhalb des Arbeitsbereichs des Extruderkopfs, so dass dort ungehindert die Entnahme des fertigen Hohlkörpers erfolgen kann.

### Bezugszeichenliste

- 1: Extruderkopf
- 2: erste Blasformeinrichtung
- 3: zweite Blasformeinrichtung
- 4: Formaufspannplatte
- 5: Formaufspannplatte
- 6: linke Blasform
- 7: rechte Blasform
- 8: Formaufspannplatte
- 9: Formaufspannplatte
- 10: linke äußere Schließenhälfte
- 11: mittlere Schließeinheit
- 12: rechte äußere Schließenhälfte
- 16: erste Spindel
- 17: Maschinenrahmen
- 18: zweite Spindel
- 18a: weitere obere Spindel
- 19: Schienen
- 20: Hydraulikzylinder
- 21: Hydraulikzylinder
- 24: Vorformling
- 25: fertiger Hohlkörper

## Patentansprüche

1. Blasformsystem zur Herstellung von Hohlkörpern umfassend wenigstens eine Extrudereinrichtung sowie wenigstens eine erste Blasformeinrichtung, die mittels eines Antriebs entlang einer Führung gegenüber der Extrudereinrichtung linear verfahrbar ist, wobei weiterhin eine Antriebseinrichtung vorgesehen ist, mittels derer die beiden die Formhälften der Blasformeinrichtung tragenden Schließenhälften der Blasformeinrichtung zwecks Öffnen bzw. Schließen der Blasform gegeneinander verfahrbar sind, sowie umfassend wenigstens eine zweite Blasformeinrichtung, die ebenfalls gegenüber der Extrudereinrichtung linear verfahrbar ist und deren die Formhälften dieser zweiten Blasformeinrichtung tragenden Schließenhälften zwecks Öffnen bzw. Schließen der zweiten Blasform gegeneinander verfahrbar sind, wobei beide Blasformeinrichtungen in Verfahrrichtung gegenüber der Extrudereinrichtung im wesentlichen in einer Flucht hintereinander angeordnet sind und wobei die erste und die zweite Blasformeinrichtung jeweils in Bezug auf die gesamte Anordnung eine äußere Schließenhälfte und jeweils eine innere Schließenhälfte aufweisen,
wobei sowohl die innere Schließenhälfte der ersten Blasformeinrichtung (6) mit der an dieser angebrachten Blasformhälfte als auch die innere Schließenhälfte der zweiten Blasformeinrichtung (7) mit der an dieser angebrachten Blasformhälfte jeweils unabhängig von den jeweiligen äußeren Schließenhälften (10, 12) der Blasformeinrichtungen gegenüber letzteren linear in Richtung der Flucht der Anordnung beider Blasformeinrichtungen verfahrbar sind, ohne den Maschinenrahmen (17) des Blasformsystems zu verfahren,
wobei das Blasformsystem eine mittlere Schließeinheit (11) aufweist, die die Funktion der inneren Schließenhälfte beider Blasformeinrichtungen (6, 7) übernimmt und an der an einer Seite die Formaufspannplatte (4) mit dem Formwerkzeug der inneren Blasformhälfte der ersten Blasformeinrichtung und an der gegenüberliegenden Seite die Formaufspannplatte (5) mit dem Formwerkzeug der inneren Blasformhälfte der zweiten Blasformeinrichtung angebracht sind, wobei diese mittlere Schließeinheit (11) auf dem Maschinenrahmen (17) bevorzugt in beide Richtungen verfahrbar angeordnet ist und wobei das Blasformsystem eine Antriebskombination mit mehreren zusammenwirkenden Antrieben umfasst
**dadurch gekennzeichnet, dass** diese Antriebskombination eine erste an der mittleren Schließeinheit (11) des Blasformsystems angreifende Antriebseinrichtung (16) umfasst, mittels derer die mittlere Schließeinheit bevorzugt in beide Richtungen linear verfahrbar ist.

2. Blasformsystem nach Anspruch 1 **dadurch gekennzeichnet, dass**, die Antriebskombination mindestens eine zweite an beiden äußeren Schließenhälften (10, 12) der Blasformeinrichtung angreifende Antriebseinrichtung (18) umfasst, so dass mittels dieser zweiten Antriebseinrichtung oder der Kombination beider Antriebseinrichtungen (16, 18) beide äußeren Schließenhälften der ersten und der zweiten Blasformeinrichtung zum Öffnen oder Schließen der jeweiligen Blasformen (6, 7) in beide Richtungen gegenüber den jeweiligen inneren Schließenhälften (Blasformhälften), die durch die mittlere Schließeinheit (11) gebildet sind, auf dem Maschinenrahmen (17) linear gegeneinander verfahrbar sind.

3. Blasformsystem nach Anspruch 2, **dadurch gekennzeichnet, dass** die mindestens eine zweite Antriebseinrichtung (18) mindestens eine Spindel (18) umfasst, die sich durch die beiden äußeren Schließenhälften (10, 12) hindurch und auch durch die mittlere Schließeinheit (11) hindurch erstreckt und bei deren Antrieb eine äußere Schließenhälfte relativ zu der anderen äußeren Schließenhälfte und/oder relativ zu der mittleren Schließeinheit verfahrbar ist.

4. Blasformsystem nach einem der Ansprüche 1 bis 3, **dadurch gekennzeichnet, dass** mittels der ersten Antriebseinrichtung (16) die mittlere Schließeinheit (11) gemeinsam mit einer äußeren Schließenhälfte (10, 12) oder mit beiden äußeren Schließenhälften verfahrbar ist.

5. Blasformsystem nach einem der Ansprüche 3 oder 4, **dadurch gekennzeichnet, dass** die erste Antriebseinrichtung (16) einen hydraulischen Antrieb oder einen Spindelantrieb umfasst und mindestens eine zweite Antriebseinrichtung eine Kombination aus hydraulischem Antrieb (20) mit vergleichsweise kurzem Hub und einem schnellen Spindelantrieb (18) mit vergleichsweise großem Hub umfasst.

6. Blasformsystem nach Anspruch 5, **dadurch gekennzeichnet, dass** mittels der Antriebskombination mit den Antriebseinrichtungen (16, 18, 20) sowohl die Verfahrwege der Schließenhälften (10, 11) zurückgelegt werden als auch die Aufbringung der Schließkraft bewirkt wird.

7. Blasformsystem nach Anspruch 6, **dadurch gekennzeichnet, dass** wenigstens ein Spindelantrieb (18) und wenigstens ein hydraulischer Antrieb (20), mittels dessen die Schließkraft aufgebracht wird, achsgleich oder achsparallel montiert und in vertikaler Richtung gesehen in Höhe der zu verfahrenden Schließenhälften (10, 11) oder der Formaufspannplatten, insbesondere etwa in Höhe der Blasformen (6, 7) angeordnet sind.

8. Blasformsystem nach einem der Ansprüche 2 bis 7, **dadurch gekennzeichnet, dass** die zweite Antriebseinrichtung neben mindestens einer sich durch die beiden äußeren Schließenhälften (10, 12) und die mittlere Schließeinheit (11) erstreckenden Spindel (18) mindestens eine weitere zu dieser parallele weiter oben angeordnete Spindel (18 a) umfasst, die die gleichen Operationen durchführt wie die Spindel (18).

9. Blasformsystem nach einem der Ansprüche 1 bis 8, **dadurch gekennzeichnet, dass** dieses mindestens zwei Anordnungen mit jeweils einer mittleren Schließeinheit (11) und je zwei äußeren Schließenhälften (10, 12) umfasst und jede dieser Anordnungen auf ihrem jeweiligen Maschinenrahmen (17) mittels eines Antriebs entlang einer Führung in eine Position unter dem Extruderkopf (1) verfahrbar ist, im rechten Winkel zur Verfahrrichtung der Schließenhälften (10, 11, 12) beim Schließen der Blasformen.

10. Blasformverfahren zur Herstellung von Hohlkörpern, bei dem jeweils die beiden die Formhälften einer Blasformeinrichtung tragenden Schließenhälften (10, 11, 12) zwecks Offnen bzw. Schließen der jeweiligen Blasform gegeneinander verfahrbar sind, unter Verwendung eines Blasformsystems gemäß einem der Ansprüche 1 bis 9, **dadurch gekennzeichnet, dass** dieses wenigstens einen Schritt umfasst, in dem eine mittlere Schließeinheit (11), welche zwei Blasformeinrichtungen (6, 7) eines Blasformsystems zugeordnet ist, auf dem Maschinenrahmen (17) des Blasformsystems linear in einer Richtung verfährt, wobei gleichzeitig die äußere Schließenhälfte (12) einer ersten Blasformeinrichtung (7) in die Gegenrichtung verfährt, so dass die Blasform dieser ersten Blasformeinrichtung geöffnet oder geschlossen wird, wobei gleichzeitig die Blasform (6) einer zweiten Blasformeinrichtung in gleicher Richtung auf dem Maschinenrahmen (17) verfährt wie die mittlere Schließeinheit (11).

11. Blasformverfahren nach Anspruch 10, **dadurch gekennzeichnet, dass** dieses wenigstens einen Schritt umfasst, in dem eine in den Formhohlraum hinein ragende Kalibriervorrichtung (14) für den herzustellenden Hohlkörper bei geschlossenen Schließenhälften (10, 11) mittels einer dieser zugeordneten Antriebseinrichtung (21, 22) synchron mit wenigstens einer der Schließenhälften/Formhälften linear verfährt.

12. Blasformverfahren nach Anspruch 10 oder 11, **dadurch gekennzeichnet, dass** dieses wenigstens einen weiteren Schritt umfasst, in dem bei geöffneten Schließenhälften der Blasformeinrichtung nur eine Schließenhälfte (10, 11) gegenüber der anderen Schließenhälfte linear verfährt, während die jeweils andere Schließenhälfte ihre Position beibehält.

13. Blasformverfahren nach einem der Ansprüche 10 bis 12, **dadurch gekennzeichnet, dass** dieses wenigstens einen Schritt umfasst, in dem die beiden Schließenhälften (10, 11, 12) beim Schließen oder Öffnen der Blasform linear aufeinander zu oder auseinander fahren und dabei einen unterschiedlichen Verfahrweg zurücklegen (asymmetrisches Schließen oder Öffnen der Blasform.)

14. Blasformverfahren nach einem der Ansprüche 10 bis 13, **dadurch gekennzeichnet, dass** dieses wenigstens einen Schritt umfasst, in dem aus der ersten Blasformeinrichtung (7) ein fertiger Hohlkörper (25) entnommen wird, während gleichzeitig in der zweiten Blasformeinrichtung (6) ein Hohlkörper ausgeformt und/oder gekühlt wird.

15. Blasformverfahren nach einem der Ansprüche 10 bis 14, **dadurch gekennzeichnet, dass** es mindestens die Abfolge der nachfolgenden Schritte umfasst:
- die erste Blasformeinrichtung (6) nimmt am Extruderkopf (1) einen Vorformling (24) auf, während in der sich daneben befindlichen zweiten Blasformeinrichtung (7) ein Hohlkörper ausgeformt und/oder gekühlt wird;
- die beiden Schließenhälften (11, 12;) der zweiten Blasformeinrichtung fahren auseinander und diese Form (7) wird geöffnet, wobei die Form (6) der ersten Blasformeinrichtung geschlossen ist und in dieser ein Hohlkörper ausgeformt und/oder gekühlt wird;
- der geblasene Hohlkörper (25) wird aus der Form (7) der zweiten Blasformeinrichtung entnommen;
- die gesamte Anordnung aus der mittleren Schließeinheit (11) und der ersten geschlossenen Blasformeinrichtung (6) verfährt gemeinsam linear auf dem Maschinenrahmen in eine Position, in der die zweite Blasformeinrichtung (7) unter dem Extruderkopf (1) steht und die zweite Blasformeinrichtung (7) nimmt einen Vorformling (24) auf;
- nach Beendigung der Aufnahme des Vorformlings an der zweiten Blasformeinrichtung wird die Form (6) der ersten Blasformeinrichtung geöffnet und der geblasene Hohlkörper (25) wird aus dieser Form entnommen;
- die gesamte Anordnung aus der mittleren Schließeinheit (11) und der zweiten geschlossenen Blasformeinrichtung (7) verfährt gemeinsam linear auf dem Maschinenrahmen (17) in eine Position, in der die erste Blasformeinrichtung (6) unter dem Extruderkopf (1) steht und erneut einen Vorformling aufnehmen kann und ein neuer Blasformzyklus kann sich anschließen.

## Claims

1. A blow moulding system for manufacturing hollow bodies, comprising at least one extruding device, as well as at least one first blow moulding device that can be linearly displaced relative to the extruding device along a guide by means of a drive, wherein a driving device is furthermore provided and the two closure halves of the blow moulding device that carry the mould halves of the blow moulding device can be displaced relative to one another by means of said driving device in order to open and close the blow mould, and comprising at least one second blow moulding device that also can be linearly displaced relative to the extruding device and the closure halves of which that carry the mould halves of this second blow moulding device can be displaced relative to one another in order to open and close the second blow mould, wherein both blow moulding devices are arranged behind one another in the direction of displacement relative to the extruding device and essentially aligned with one another, and wherein the first and the second blow moulding device respectively feature an outer closure half and an inner closure half referred to the overall arrangement,
wherein the inner closure half of the first blow moulding device (6) with the blow mould half arranged thereon, as well as the inner closure half of the second blow moulding device (7) with the blow mould half arranged thereon, respectively can be linearly displaced relative to and independently of the respective outer closure halves (10, 12) of the blow moulding devices in the direction of the alignment of the two blow moulding devices without displacing the machine frame (17) of the blow moulding system,
wherein the blow moulding system features a central closure unit (11) that fulfills the function of the inner closure halves of both blow moulding devices (6, 7), wherein the die platen (4) with the extrusion die of the inner blow mould half of the first blow moulding device is arranged on one side of said central closure unit and the die platen (5) with the extrusion die of the inner blow mould half of the second blow moulding device is arranged on the opposite side of the central closure unit, wherein this central closure unit (11) is preferably arranged on the machine frame (17) such that it can be displaced in both directions, and wherein the blow moulding system comprises a drive combination with several cooperating drives,
**characterized in that** the drive combination comprises a first driving device (16) that engages on the central closure unit (11) of the blow moulding system and makes it possible to linearly displace the central closure unit, preferably in both directions.

2. The blow moulding system according to Claim 1, **characterized in that** the drive combination comprises at least one second driving device (18) that engages on both outer closure halves (10, 12) of the blow moulding device such that both outer closure halves of the first and the second blow moulding device can be linearly displaced on the machine frame (17) relative to the respective inner closure halves (blow mould halves) formed by the central closure unit (11) in both directions by means of this second driving device or the combination of both driving devices (16, 18) in order to open or close the respective blow moulds (6, 7).

3. The blow moulding system according to Claim 2, **characterized in that** the at least one second driving device (18) comprises at least one spindle (18) that extends through both outer closure halves (10, 12), as well as through the central closure unit (11), and in the driven state makes it possible to displace one outer closure half relative to the other outer closure half and/or relative to the central closure unit.

4. The blow moulding system according to one of Claims 1 to 3, **characterized in that** the central closure unit (11) can be displaced together with an outer closure half (10, 12) or both outer closure halves by means of the first driving device (16).

5. The blow moulding system according to Claim 3 or 4, **characterized in that** the first driving device (16) comprises a hydraulic drive or a spindle drive and at least one second driving device comprises a combination of a hydraulic drive (20) with comparatively short stroke and a fast spindle drive (18) with comparatively long stroke.

6. The blow moulding system according to Claim 5, **characterized in that** the drive combination with the driving devices (16, 18, 20) makes it possible to realize the displacement of the closure halves (10, 11), as well as to generate the closing force.

7. The blow moulding system according to Claim 6, **characterized in that** at least one spindle drive (18) and at least one hydraulic drive (20), by means of which the closing force is generated, are mounted equiaxial or axially parallel and, referred to the vertical direction, arranged at the height of the closure halves (10, 11) to be displaced or the die platens, particularly at approximately the height of the blow moulds (6, 7).

8. The blow moulding system according to one of Claims 2 to 7, **characterized in that** the second driving device features at least one spindle (18) that extends through the two outer closure halves (10, 12) and the central closure unit (11), as well as at least one additional spindle (18a) that is arranged above and parallel to the spindle (18) and carries out the same operations as this spindle.

9. The blow moulding system according to one of Claims 1 to 8, **characterized in that** it comprises at least two arrangements that respectively feature a central closure unit (11) and two outer closure halves (10, 12), and **in that** each of these arrangements can be displaced on its respective machine frame (17) into a position underneath the extrusion head (1) along a guide by means of a drive, namely perpendicular to the direction of displacement of the closure halves (10, 11, 12) when the blow moulds are closed.

10. A blow moulding method for manufacturing hollow bodies, in which the two closure halves (10, 11, 12) that carry the mould halves of a blow moulding device respectively can be displaced relative to one another in order to open and close the respective blow mould, particularly by utilizing a blow moulding system according to one of Claims 1 to 9, **characterized in that** this method comprises at least one step, in which a central closure unit (11) that is assigned to two blow moulding devices (6, 7) of a blow moulding system is linearly displaced in one direction on the machine frame (17) of the blow moulding system, wherein the outer closure half (12) of a first blow moulding device (7) is simultaneously displaced in the opposite direction such that the blow mould of this first blow moulding device is opened or closed, and wherein the blow mould (6) of a second blow moulding device is simultaneously displaced on the machine frame (17) in the same direction as the central closure unit (11).

11. The blow moulding method according to Claim 10, **characterized in that** it comprises at least one step, in which a calibrating device (14) for the hollow body to be manufactured, which protrudes into the mould cavity, is linearly displaced synchronous with at least one of the closure halves/mould halves by means of an assigned driving device (21, 22) while the closure halves (10, 11) are closed.

12. The blow moulding method according to Claim 10 or 11, **characterized in that** it comprises at least one additional step, in which only one closure half (10, 11) is linearly displaced relative to the other closure half and the other respective closure half maintains its position while the closure halves of the blow moulding device are open.

13. The blow moulding method according to one of Claims 10 to 12, **characterized in that** it comprises at least one step, in which the two closure halves (10, 11, 12) are linearly displaced toward one another or apart from one another when the blow mould is closed or opened and travel a different distance during this displacement (asymmetric closing or opening of the blow mould).

14. The blow moulding method according to one of Claims 10 to 13, **characterized in that** it comprises at least one step, in which a finished hollow body (25) is removed from the first blow moulding device (7) while a hollow body is simultaneously moulded and/or cooled in the second blow moulding device (6).

15. The blow moulding method according to one of Claims 10 to 14, **characterized in that** it comprises at least the following sequence of steps:
- the first blow moulding device (6) receives a preform (24) at the extrusion head (1) while a hollow body is moulded and/or cooled in the adjacently arranged second blow moulding device (7);
- the two closure halves (11, 12) of the second blow moulding device are displaced apart from one another and this mould (7) is opened, wherein the mould (6) of the first blow moulding device is closed and a hollow body is moulded and/or cooled therein;
- the blown hollow body (25) is removed from the mould (7) of the second blow moulding device;
- the entire arrangement consisting of the central closure unit (11) and the first closed blow moulding device (6) is linearly displaced on the machine frame into a position, in which the second blow moulding device (7) is situated underneath the extrusion head (1) and the second blow moulding device (7) receives a preform (24);
- after the preform has been received by the second blow moulding device, the mould (6) of the first blow moulding device is opened and the blown hollow body (25) is removed from this mould;
- the entire arrangement consisting of the central closure unit (11) and the second closed blow moulding device (7) is linearly displaced on the machine frame (17) into a position, in which the first blow moulding device (6) is situated underneath the extrusion head (1) such that it can once again receive a preform and a new blow moulding cycle can be carried out.

## Revendications

1. Système de moulage par gonflage pour la fabrication de corps creux, comprenant au moins un dispositif d'extrusion ainsi qu'au moins un premier dispositif de moulage par gonflage qui peut se déplacer linéairement grâce à un organe de commande le long d'un guide par rapport au dispositif d'extrusion, étant prévu au moins un dispositif moteur grâce auquel les deux moitiés de fermeture supportant les demi-moules du dispositif de moulage par gonflage sont déplaçables l'une vers l'autre pour ouvrir ou fermer le moule de gonflage, et comprenant également au moins un second dispositif de moulage par gonflage qui est également déplaçable linéairement par rapport au dispositif d'extrusion et dont les moitiés de fermeture supportant les demi-moules de ce second dispositif de moulage par gonflage sont déplaçables l'une vers l'autre pour ouvrir ou fermer le second moule de gonflage, les deux dispositifs de moulage par gonflage étant, dans le sens de circulation, sensiblement alignés l'un derrière l'autre par rapport au dispositif d'extrusion et les premier et second dispositifs de moulage par gonflage présentant respectivement, relativement à l'ensemble de l'agencement, une moitié de fermeture extérieure et respectivement une moitié de fermeture intérieure,
aussi bien la moitié de fermeture intérieure du premier dispositif de moulage par gonflage (6) où le demi-moule de gonflage est installé que la moitié de fermeture intérieure du second dispositif de moulage par gonflage (7) où le demi-moule de gonflage est installé étant respectivement déplaçables linéairement indépendamment des moitiés de fermeture extérieures respectives (10, 12) du dispositif de moulage par gonflage étant déplaçables par rapport à celui-ci en direction de l'alignement de l'agencement formé par les deux dispositifs de moulage par gonflage sans déplacer le bâti de machine (17) du système de moulage par gonflage,
le système de moulage par gonflage présentant une unité de fermeture médiane (11) qui assume la fonction de moitié de fermeture intérieure des deux dispositifs de moulage par gonflage (6, 7) et la plaque de montage de moule (4) comportant l'outillage de moulage du demi-moule de gonflage intérieur du premier dispositif de moulage par gonflage étant installée d'un côté de la plaque de montage de moule (4) avec l'outillage de moulage du demi-moule de gonflage intérieur du premier dispositif de moulage par gonflage et la plaque de montage de moule (5) comportant l'outillage de moulage du demi-moule de gonflage intérieur du second dispositif de moulage par gonflage étant installée du côté opposé, cette unité de fermeture médiane (11) étant disposée sur le bâti de machine (17) de préférence de manière à pouvoir se déplacer dans les deux sens et le système de moulage par gonflage comprenant une combinaison motrice englobant plusieurs organes de commande coopérants,
**caractérisé en ce que** cette combinaison motrice comprend un premier dispositif moteur (16) s'engrenant sur l'unité de fermeture médiane (11) du système de moulage par gonflage et grâce auquel l'unité de fermeture médiane est déplaçable linéairement de préférence dans les deux sens.

2. Système de moulage par gonflage selon la revendication 1, **caractérisé en ce que** la combinaison motrice englobe au moins un second dispositif de commande (18) s'engrenant sur les deux moitiés de fermeture extérieures (10, 12) du dispositif de moulage par gonflage (18), de sorte que, au moyen de ce second dispositif de commande ou de la combinaison des deux dispositifs de commande (16, 18), les deux moitiés de fermeture extérieures des premier et second dispositifs de moulage par gonflage, les deux moitiés de fermeture extérieures des premier et second dispositifs de moulage par gonflage sont déplaçables linéairement l'une vers à l'autre sur le bâti de machine (17) par rapport aux moitiés de fermeture intérieures (demi-moules de gonflage) respectives qui sont constituées par l'unité de fermeture médiane (11) pour ouvrir ou fermer les moules de gonflage respectifs (6, 7) dans les deux sens.

3. Système de moulage par gonflage selon la revendication 2, **caractérisé en ce que** l'au moins un second dispositif de commande (18) comprend au moins une broche (18) qui s'étend à travers les deux moitiés de fermeture extérieures (10, 12) et aussi à travers l'unité de fermeture médiane (11) et lors de l'entraînement de laquelle une moitié de fermeture extérieure est déplaçable par rapport à l'autre moitié de fermeture extérieure et/ou par rapport à la moitié de fermeture médiane.

4. Système de moulage par gonflage selon une des revendications 1 à 3, **caractérisé en ce que** la moitié de fermeture médiane (11) est déplaçable en commun avec une moitié de fermeture extérieure (10 12) ou avec les deux moitiés de fermeture extérieures au moyen du premier dispositif moteur (16).

5. Système de moulage par gonflage selon les revendications 3 ou 4, **caractérisé en ce que** le premier dispositif moteur (16) comprend un organe de commande hydraulique ou un organe de commande à broche et qu'au moins un second dispositif moteur comprend une combinaison d'un organe de commande hydraulique (20) à course relativement courte et un organe de commande à broche (18) à course relativement longue.

6. Système de moulage par gonflage selon la revendication 5, **caractérisé en ce que**, grâce à la combinaison motrice avec les dispositifs moteurs (16, 18, 20), aussi bien les courses de déplacement des moitiés de fermeture (10, 11) sont parcourues que l'application de la force de fermeture est déclenchée.

7. Système de moulage par gonflage selon la revendication 6, **caractérisé en ce qu'**au moins un organe de commande à broche (18) et au moins un organe de commande hydraulique (20) à l'aide duquel la force de fermeture est appliquée sont montés sur le même axe ou un axe parallèle et vus, dans le sens vertical, sont disposés à hauteur des moitiés de fermeture (10, 11) à déplacer ou des plaques de montage de moule, en particulier approximativement à hauteur des moules de gonflage (6, 7)

8. Système de moulage par gonflage selon une des revendications 2 à 7, **caractérisé en ce que** le second dispositif moteur (16), outre au moins une broche (18) s'étendant à travers les deux moitiés de fermeture extérieures (10, 12) et l'unité de fermeture médiane (11), comprend au moins une autre broche (18a) parallèle à celle-ci et disposée plus haut et qui exécute les mêmes opérations que la broche (18).

9. Système de moulage par gonflage selon une des revendications 1 à 8, **caractérisé en ce que** celui-ci comprend au moins deux dispositifs comportant chacun une unité de fermeture médiane (11) et chacun deux moitiés de fermeture extérieures (10, 12) et que chacun de ces dispositifs est déplaçable sur son bâti de machine respectif (17) au moyen d'un organe de commande le long d'un guide vers une position située sous la tête d'extrusion (1), à angle droit par rapport au sens de déplacement des moitiés de fermeture (10, 11, 12), lors de la fermeture des moules de gonflage.

10. Procédé de moulage par gonflage pour la fabrication de corps creux, dans lequel respectivement les deux moitiés de fermeture (10, 11, 12) supportant les demi-moules d'un dispositif de moulage par gonflage sont déplaçables l'une vers l'autre pour ouvrir ou fermer le moule de gonflage respectif, en utilisant un système de moulage par gonflage selon une des revendications 1 à 9, **caractérisé en ce que** celui-ci comprend au moins une étape dans laquelle une unité de fermeture médiane (11) qui est associée à deux dispositifs de moulage par gonflage (6, 7) d'un système de moulage par gonflage se déplace linéairement sur le bâti de machine (17) du système de moulage par gonflage dans un sens, tandis que la moitié de fermeture extérieure (12) d'un premier dispositif de moulage par gonflage (7) se déplace simultanément en sens inverse, de sorte que le moule de gonflage de ce premier dispositif de moulage par gonflage s'ouvre ou se ferme, le moule de gonflage (6) d'un second dispositif de moulage par gonflage se déplaçant simultanément dans le même sens que l'unité de fermeture médiane (11) sur le bâti de machine (17).

11. Procédé de moulage par gonflage selon la revendication 10, **caractérisé en ce que** celui-ci comprend au moins une étape dans laquelle un dispositif de calibrage (14) saillant vers l'intérieur de la cavité du moule pour le corps creux à fabriquer, les moitiés de fermeture (10, 11) étant fermées, se déplace linéairement, grâce à un dispositif moteur associé (21, 22) qui lui est associé, de manière synchrone avec au moins un ou une des moitiés de fermeture/demi-moules.

12. Procédé de moulage par gonflage selon la revendication 10 ou 11, **caractérisé en ce que** celui-ci comprend au moins une autre étape dans laquelle les moitiés de fermeture du dispositif de moulage par gonflage étant ouvertes, seule une moitié de fermeture (10, 11) se déplace linéairement vers l'autre moitié de fermeture, tandis que l'autre moitié de fermeture respective garde sa position.

13. Procédé de moulage par gonflage selon une des revendications 10 à 12, **caractérisé en ce que** celui-ci comprend au moins une étape dans laquelle les deux moitiés de fermeture (10, 11, 12), à la fermeture ou à l'ouverture du moule de gonflage, se rapprochent ou s'écartent linéairement l'une de l'autre et parcourent alors une course de déplacement différente (fermeture ou ouverture asymétrique du moule de gonflage).

14. Procédé de moulage par gonflage selon une des revendications 10 à 13, **caractérisé en ce que** celui-ci comprend au moins une étape dans laquelle un corps creux fini (25) est sorti du premier dispositif de moulage par gonflage (7) tandis qu'un corps creux est déformé et/ou refroidi simultanément dans le second dispositif de moulage par gonflage (6).

15. Procédé de moulage par gonflage selon une des revendications 10 à 14, **caractérisé en ce que** celui-ci comprend au moins la série d'étapes suivantes :
- le premier dispositif de moulage par gonflage (6) prend une ébauche (24) sur la tête d'extrusion (1) pendant qu'un corps creux est déformé et/ou refroidi dans le second dispositif de moulage par gonflage (7) voisin ;
- les deux moitiés de fermeture (11, 12) du second dispositif de moulage par gonflage s'écartent et ce moule (7) s'ouvre, le moule (6) du premier dispositif de moulage par gonflage étant fermé et un corps creux étant déformé et/ou refroidi dans celui-ci ;
- le corps creux gonflé (25) est sorti du moule (7) du second dispositif de moulage par gonflage ;
- l'ensemble de l'agencement composé de l'unité de fermeture médiane (11) et du premier dispositif de moulage par gonflage (6) fermé se déplace linéairement sur le bâti de machine vers une position dans laquelle le second dispositif de moulage par gonflage (7) se trouve sous la tête d'extrusion (1) et le second dispositif de moulage par gonflage (7) prend une ébauche (24) ;
- une fois que l'ébauche a été prise sur le second dispositif de moulage par gonflage, le moule (6) du premier dispositif de moulage par gonflage s'ouvre et le corps creux gonflé (25) est sorti de ce moule ;
- l'ensemble de l'agencement composé de l'unité de fermeture médiane (11) et du second dispositif de moulage par gonflage (7) fermé se déplace ensemble linéairement sur le bâti de machine (17) vers une position dans laquelle le premier dispositif de moulage par gonflage (6) se trouve sous la tête d'extrusion (1) et peut à nouveau prendre une ébauche et un nouveau cycle de moulage par gonflage peut suivre.
